# EUROPÄISCHE PATENTSCHRIFT

(11) **EP 0 967 422 B1**
(45) Veröffentlichungstag und Bekanntmachung des Hinweises auf die Patenterteilung: **07.01.2004**
(21) Anmeldenummer: 99111542.9
(22) Anmeldetag: 15.06.1999
(51) Int. Cl.: F16J 15/22

(54) **Packungsgarn aus Graphit- und Plastikfolie**
Packing yarn of graphite and plastic sheet
Garniture d'étanchéité en graphite et feuille de plastique

(30) Priorität: 27.06.1998 DE 19828789
(43) Veröffentlichungstag der Anmeldung: 29.12.1999
(73) Patentinhaber: SGL CARBON AG, 65203 Wiesbaden (DE)
(72) Erfinder: Hirschvogel, Alfred, 86462 Langweid (DE); Öttinger, Oswin Dr.-Ing., 86405 Meitingen (DE); Schellenberger, Bernd, 86368 Gersthofen (DE); Römmler, Mike Dr., Los Angeles, CA 90024 (US)

(56) Entgegenhaltungen:
- EP-A- 0 340 303
- GB-A- 2 285 067

## Beschreibung

Die der Patentanmeldung zugrunde liegende Erfindung betrifft ein Packungsgarn aus mindestens zwei miteinander verdrillten Bändern aus einem Schichtstoff, der aus alternierend angeordneten Schichten zweier flächiger Werkstoffe, die miteinander verbunden sind, besteht und zwar erstens, aus mindestens einer Lage aus flexiblem Graphit und zweitens, mindestens einer Lage eines verstärkenden Mittels,
- wobei sich das verstärkende Mittel entweder auf beiden nach außen zeigenden Flachseiten des flexiblen Graphits des Schichtstoffes oder sich nur auf einer der nach außen zeigenden Flachseiten des flexiblen Graphits des Schichtstoffes oder sich auf keiner der nach außen zeigenden Flachseiten des flexiblen Graphits des Schichtstoffes befindet. Eine Ausführungsform dieses Packungsgarns besteht aus mindestens zwei miteinander nach einem Garnherstellungsverfahren, z.B. durch Verdrillen oder Verflechten miteinander verbundenen Bändern aus einem Schichtstoff, der aus einer Lage aus flexiblem Graphit, die auf mindestens einer ihrer beiden Flachseiten mit einem verstärkenden Mittel verbunden ist, aufgebaut ist.

Packungsgarne der vorgenannten Art werden zum Herstellen von Dichtungen und insbesondere von Packungen zum Abdichten von Wellen- und Spindeldurchführungen verwendet. Nach einem bekannten Verfahren dazu werden zwei oder mehr Packungsgarne nach einem textilen Verarbeitungsverfahren wie z.B. Flechten, zu einer Schnur oder einem Zopf zusammengefaßt und sodann auf eine bestimmte, vorgegebene Länge zugeschnittene Teile solcher Schnüre oder Zöpfe in einer geeigneten Preßform zu einem Packungsring verdichtet. Mehrere solcher Packungsringe ergeben dann, wenn sie in den passenden Packungsraum einer Stopfbuchse eingesetzt worden sind, eine Stopfbuchspackung. Nach einem anderen bekannten Verfahren werden zugeschnittene Längen einer aus den Packungsgarnen hergestellten Schnur oder eines so hergestellten Zopfes, die den Maßen eines bestimmten Packungsraumes entsprechen, direkt in diesen Packungsraum eingelegt und die so hergestellte, noch stark komprimierbare Packung durch die Packungsbrille bis zum Dichthalten der Packungsanordnung angespannt. Nach einem dritten Verfahren können die Packungsgarne oder aus ihnen hergestelle Packungsschnüre oder -Zöpfe direkt um die Welle oder Spindel, deren Durchführung gedichtet werden soll, gewickelt werden, bis die für die Herstellung der benötigten Packung erforderliche Menge an Packungsgarn oder -Zopf aufgewickelt ist und es kann der so erzeugte Wickel nach dem Versenken in dem Packungsraum mit Hilfe der Packungsbrille bis zum Dichthalten der Packungsanordnung angespannt werden.

Packungsgarne der vorgenannten Art werden u.a. unter Verwendung von flexiblem Graphit oder von expandiertem Graphit hergestellt. Expandierter Graphit wird durch kurzzeitiges Erhitzen von Graphitsalzen oder Graphiteinlagerungsverbindungen in Form einer lockeren, wurmförmigen Substanz erhalten. Durch Verdichten des so erhaltenen expandierten Graphits wird der flexible Graphit erhalten, der im allgemeinen in Form von Graphitfolien oder - Platten erzeugt wird (siehe z.B. U.S.-Pat. Nr. 3,404,061). Zum Herstellen von Packungsgarnen oder Packungsschnüren oder -Zöpfen durch beispielsweise Flecht-, Strick- oder Verdrillprozesse werden die Graphitfolien in Streifen oder Bänder bestimmter Breite geschnitten und diese Streifen dann zu Packungsgarnen und diese dann zu den Schnüren Zöpfen oder Strängen weiterverarbeitet. Trotz einer gewissen Flexibilität reißen oder/und brechen die Streifen oder Bänder aus flexiblem Graphit bei diesen Verarbeitungsprozessen, da speziell ihre Zugfestigkeit zu gering ist. Es sind deshalb eine Vielzahl von Möglichkeiten angegeben worden, die vorgenannten Schwierigkeiten beim Herstellen von Packungsfüllungen aus flexiblem Graphit zu bewältigen.

Bei einer Gruppe von Lösungen des Problems verwendet man ein Substrat mit ausreichend großer Zugfestigkeit, das mit einem Haftvermittler, z. B. einem Kleber, ausgerüstet ist, belegt dieses Substrat mit expandiertem Graphit und preßt den expandierten Graphit mit dem Substrat zusammen. Als Substrate können Metalldrähte, Kunst- und Naturfasern oder - Fäden, Gewebe und Folien verschiedener Art verwendet werden. Die so erhaltenen Stränge oder Bänder können dann gegebenenfalls nochmals z.B. durch Umstricken oder Umflechten oder sonst eine andere Art und Weise zusätzlich mit Fäden, Fasern oder Drähten verstärkt werden und durch die bekannten Verarbeitungsverfahren wie Flechten, zu Vorprodukten für Packungen weiterverarbeitet werden (EP 0 388 481 = U.S. 4,961,988; EP 0 466 923 B1 = U.S. 5,370,405).

Bei einer anderen Gruppe von Lösungen geht man von Graphitfolien aus, die in Streifen geschnitten worden sind. In EP 0 253 031 B1 = U.S. 4,705,722 wird dazu beschrieben, Bänder aus flexiblem Graphit mit einer Breite von nicht mehr als 5 mm übereinanderzulegen und mit einem Geflecht oder Gestrick aus einem Fasermaterial zu umgeben. Die so erhaltenen Stränge werden dann weiter zu Kordeln geflochten, die als Ausgangsmaterial für das Herstellen von Packungen geeignet sind. Gemäß EP 0 466 923 B1 = U.S. 5,370,405 werden Graphitfolienstreifen mit einer Breite von nicht mehr als 5 mm mittels Klebern mit verstärkenden organischen, anorganischen oder metallischen Fasern verbunden, diese verstärkten Folienstreifen durch Flechten etc. zu Kordeln verarbeitet und diese Kordeln nochmals mit einem verstärkenden Fasergeflecht umgeben, ehe sie zu Packungen weiterverarbeitet werden. Durch EP 0 681 125 A1 wird offenbart, breite Rollen Graphitfolien zu Rollen von geringerer Breite zu zerschneiden, die so erhaltenen Folienbänder mit einer quer verlaufenden Einprägung oder Riffelung zu versehen, diese geriffelten Folienbänder zu vergleichsweise schmalen Streifen von ca. 2 mm Breite zu schneiden und diese schmalen, geriffelten Streifen zu einem Strang zusammenzufassen und mit einem verstärkenden Fasergeflecht zu umgeben. Nach EP 0 340 303 = U.S. 5,240,769 und U.S. 5,134,030 werden auf eine Breite von nicht mehr als 5 mm geschnittene Streifen aus Graphitfolie mit organischen, anorganischen oder metallischen Fäden, Fasern oder Folien belegt und dadurch verstärkt und diese verstärkten Graphitfolienstreifen bei der weiteren Verarbeitung zu verflecht- oder verdrillbaren Packungsgarnen zusätzlich mit einer weiteren Verstärkung aus Fasern ausgerüstet. Bei dieser technischen Lösung können auch mehrere Streifen Graphitfolie übereinandergelegt und verarbeitet werden. Gemäß EP 0 794 367 A2 können Graphitfolienbänder mit einer Breite von mehr als 6 mm mit einer Vielzahl von Mitteln, wie Drähten, Bändern, Garnen aus anorganischen, metallischen oder organischen Mitteln verstärkt und dann zu Packungsschnüren oder -Kordeln verflochten werden. Die Graphitfolien können hier auch durch eine Oberflächenbeschichtung aus Kunststoff oder durch Laminieren mit einem Kunststoff verstärkt sein. Eine Breite der für ein Verflechten oder Verstricken vorgesehenen Graphitfolienbänder von mehr als 5 mm ist jedoch wie aus den Offenbarungen von EP 0 253 031 oder EP 0 340 303 hervorgeht, ungünstig. Derartige Folien lassen sich schwer verarbeiten und ergeben Packungsschnüre von weniger dichtem Aufbau.

Deshalb bedient man sich beim Verarbeiten von breiteren Bändern und Lagen aus Graphitfolien bevorzugt Falttechniken. So entnimmt man aus EP 0 444 456 A1, daß einzelne oder zu mehreren übereinander gelegte Folienbänder quer zu ihrer Längserstreckung gefaltet werden und aus dem gefalteten Gebilde entweder direkt oder nach dem Umflechten des gefalteten Gebildes mit Fäden, Fasern oder Drähten ein Packungsring erhalten werden kann. Vor dem Falten können die Folienbänder noch zum Verstärken mit Fäden, Fasern oder Geweben verbunden werden oder diese Verstärkungsmittel werden vor dem Falten zwischen die Folienlagen gelegt. Es wird auch ein Einlegen von korrosionsbeständigen Kunststoffolien, die vorzugsweise zusätzlich Gleiteigenschaften aufweisen wie z.B. Folien aus Polytetrafluorethylen, beschrieben. Diese Kunststoffolien dienen hier jedoch nicht Verstärkungszwecken. Gemäß U.S. 5,605,341 und U.S. 5,549,306 werden breite Graphitfolienbänder entlang ihrer Längserstreckung S-förmig oder spiralförmig gefaltet, wobei vor dem oder beim Falten Faserverstärkungen eingelegt werden können. Die so erhaltenen Stränge werden dann noch zum weiteren Verstärken mit Fasern umflochten oder umstrickt, um sie zum Herstellen von Packungen geeignet zu machen. Aus U.S. 5,225,262 entnimmt man, daß in Graphitfolien Längsprofile eingeprägt und die so vorbereiteten Graphitfolien mindestens einmal parallel zum Verlauf der Längsprofilierung gefaltet werden. Die gefalteten Gebilde werden sodann mit einem Garn, das vorzugsweise aus Inconel(TM) besteht, durch beispielsweise Flechten oder Stricken umgeben und dann kalibriert. Die so erzeugten Stränge werden dann zu einer Packungsschnur verflochten, diese kalibriert und danach nochmals mit einem temperaturbeständigen, hochfesten Garn umflochten. GB 2 285 067 A offenbart, Graphitfolienbahnen, die mit Klebstoff belegt sein können, in mehreren Lagen übereinander zu legen und mindestens eine der Oberflächen dieses Geleges mit Fasern oder Fäden zu belegen, die parallel zur Längserstreckung des Geleges verlaufen und sich nicht kreuzen. Sodann werden die mit Fasern belegten Foliengelege parallel zu den Fasern oder Fäden in Streifen geschnitten und die so erhaltenen Stränge so gefaltet oder verrundet, daß ein Strang entsteht, der aus einem Graphitfolienkern mit einer äußeren Bedeckung aus in Längsrichtung parallel laufenden Fasern oder Fäden besteht. Die äußere Armierung mit Fasern oder Fäden soll das Austreten des Foliengraphits bei Anwendung von Druck verhindern.

Aus der EP 0 601 670 ist ein weiteres Verfahren zum Herstellen von Packungsgarnen oder Packungsbändern unter Verwendung von Graphitfolienbändern zu entnehmen. Dabei werden Graphitfolienbänder auf einer ihrer Oberflächen zunächst mit einer Kleberschicht versehen, auf die ein verstärkend wirkender Faden aufgebracht wird. Das mit dem verstärkenden Faden versehene Graphitfolienband wird sodann durch eine konisch zulaufende Düse gezogen und dann zwischen zwei Rollen platt gepreßt. Bei diesem Vorgang wird das Band zuerst verrundet und dann unter Einbinden des verstärkenden Fadens und unter Verkleben der innen liegenden Flächen der Graphitfolie miteinander zu einem verflechtbaren Band geformt, das dann zu Vorprodukten für das Herstellen von Packungen oder direkt zu Packungen verarbeitet werden kann. Das Aufbringen des Klebstoffs kann mit einer beidseitig mit Klebstoff beschichteten Folie geschehen. Diese Folie dient jedoch nicht zum Zweck der Verstärkung.

Bei den vorbeschriebenen Lösungen zum Herstellen von Packungsgarnen, -Schnüren, -Bändern oder Packungen werden entweder Fasern zum Verstärken der wenig zugfesten Graphitfolien bzw. Graphitfolienbänder oder es werden Kombinationen von Faserverstärkungen und Folien verwendet. Das gezielte Aufbringen und kraftschlüssige Koppeln von Fasern an die Graphitfolie ist vergleichsweise schwierig und das Umflechten von Graphitfolien oder Graphitfolienbändern auf deren Außenseiten ist vergleichsweise aufwendig und in fast allen Fällen ist es erforderlich, mindestens zwei Verstärkungen in die Graphitfolienbänder einzubauen, um diese genügend zugfest zu machen und dem resultierenden Packungsstrang gute Gebrauchseigenschaften zu geben. Wenn eine Verstärkung der Graphitfolienbänder mit Folien, die aus anderen Materialien bestehen, gewählt wird, ist entweder eine zusätzliche Verstärkung durch Fäden, Fasern oder Drähte oder wie im Falle der EP 0 794 367 die Verwendung von Graphitfolienbändern von 6 mm Breite oder mehr erforderlich.

Es war deshalb die Aufgabe der der Patentanmeldung zugrundeliegenden Erfindung, die vorbeschriebenen Nachteile zu beseitigen. Insbesondere war es die Aufgabe, ein Packungsgarn zu schaffen, das zum weitaus größten Teil aus verformbarem Graphit besteht, dabei keine Fasern, Fäden oder Drähte als verstärkendes Material enthält, hoch reißfest ist, sich gut nach allen gebräuchlichen Verfahren, einschließlich Verdrill-, Flecht- und Strickverfahren, zu Packungen verarbeiten läßt und dessen Herstellung mit einem Minimum einfacher Verfahrensschritte möglich ist. Eine weitere Aufgabe der Erfindung war es, ein Verfahren zum Herstellen von Packungsgarnen der vorgenannten Art anzugeben.

Die Aufgabe wird gelöst gemäß Patentanspruch 1 durch Bereitstellen eines Packungsgarns aus mindestens zwei nach einem Garnherstellungsverfahren miteinander verbundenen Bändern aus einem Schichtstoff, der aus alternierend angeordneten Schichten zweier flächiger Werkstoffe, die miteinander verbunden sind, besteht und zwar erstens, aus mindestens einer Lage aus flexiblem Graphit und zweitens, mindestens einer Lage eines verstärkenden Mittels, wobei entweder beide äußeren Flachseiten der oberen und der unteren Schicht des Schichtstoffes aus flexiblem Graphit oder nur eine dieser Flachseiten aus flexiblem Graphit oder keine dieser Flachseiten aus flexiblem Graphit besteht und wobei die Packungsschnur dadurch gekennzeichnet ist, daß die Bänder aus Schichtstoff eine Breite von nicht mehr als 5 mm aufweisen und aus Lagen flexiblen Graphits mit einer Dicke von nicht mehr als 1 mm und einer Rohdichte im Bereich von 0,7 bis 1,8 g/cm³ und aus Lagen einer Kunststoffolie mit einer Zugfestigkeit von mindestens 25 MPa und einem Elastizitätsmodul von mindestens 0,4 GPa, bestehen. Eine weitere Lösung der Aufgabe besteht nach Patentanspruch 2 im Bereitstellen einer Packungsschnur aus mindestens zwei nach einem Garnherstellungsverfahren miteinander verbundenen Bändern aus einem Schichtstoff, der aus nur einer Lage aus flexiblem Graphit, die auf mindestens einer ihrer beiden Flachseiten mit einem verstärkenden Mittel verbunden ist, besteht, wobei dieses Packungsgarn dadurch gekennzeichnet ist, daß die Bänder aus Schichtstoff eine Breite von nicht mehr als 5 mm aufweisen und aus einer Lage flexiblen Graphits mit einer Dicke von nicht mehr als 1 mm und einer Rohdichte im Bereich von 0,7 bis 1,8 g/cm³ und aus mindestens einer Lage einer Kunststoffolie mit einer Zugfestigkeit von mindestens 25 MPa und einem Elastizitätsmodul von mindestens 0,4 GPa, bestehen. Die mindestens zwei Bänder aus dem Schichtstoff, die miteinander zu einem Packungsgarn verbunden werden sollen, sind vorzugsweise von flacher Gestalt und unverdrillt. Es kann jedoch mindestens eins davon vor dem Verarbeiten zu einem Packungsgarn für sich verdrillt worden sein. Die Aufgabe wird desweiteren durch die Angabe eines Verfahrens zum Herstellen von Packungsgarnen des vorgenannten neuen Typs gelöst. Die nachgeordneten Patentansprüche geben vorteilhafte Ausgestaltungen der erfinderischen Lösungen an.

Das Packungsgarn gemäß der Erfindung ist aus zwei oder mehr als zwei Bändern, vorzugsweise aus 2 bis 5 Bändern aufgebaut, die miteinander durch textile Verarbeitungsverfahren wie beispielsweise Flechten, Stricken, Weben oder Verdrillen zu einem Garn oder einem Strang verbunden sind. Wegen seiner Einfachheit und seines geringen Aufwandes in Verbindung mit dem Erreichen einer guten Produktqualität, ist das Verdrillen bevorzugt. Nach oben ist die Anzahl der zu einem Packungsgarn zusammenfügbaren Bänder durch das Arbeitsverfahren, das angewandt wird, begrenzt. Im allgemeinen werden durch Verdrillen bis zu 12 Bänder zu einem Packungsgarn zusammengefügt. Vorzugsweise werden jedoch 2 bis 5 Bänder miteinander verdrillt. Die Anzahl der Bänder, die zu einem Packungsgarn zusammengefügt werden sollen, hängt auch von der Breite und der Dicke der Bänder ab. Die Breite soll 5 mm nicht überschreiten, um hochwertige Packungsgarne zu erhalten. Für die meisten Verarbeitungsverfahren und Anwendungsfälle haben sich Breiten der Bänder von nicht mehr als 3 mm und Dicken von nicht mehr als 2 mm bewährt. Wenn besonders dünne oder flexible Packungsgarne hergestellt werden sollen, empfiehlt sich die Verwendung von Bändern mit einer Breite von nicht mehr als 2 mm und einer Dicke von nicht mehr als 1 mm. Die angegebenen Verhältnisse von Breiten zu Dicken geben günstige Bänderquerschnitte wieder. Eine Kopplung zwischen diesen Werten für alle Bänder besteht nicht. Im Extremfall können auch Bänder mit einer Breite von 5 mm und einer Dicke von unter 0,35 mm verwendet werden.

Die Bänder müssen, um überhaupt nach einem der vorstehenden Verfahren verarbeitet werden zu können, eine gewisse Mindestzugfestigkeit aufweisen und sie müssen auch für das Weiterverarbeiten zu Packungsgarnen, Packungsschnüren, Packungszöpfen oder zu Packungen eine entsprechende Zugfestigkeit haben und sie müssen den aus ihnen hergestellten Packungen auch bestimmte Eigenschaften, auf die im folgenden noch eingegangen werden wird, verleihen. Da die Graphitfolien allein und die allein aus Graphitfolien herstellbaren Bänder eine völlig ungenügende Zugfestigkeit und Reißfestigkeit haben, wird die Zugfestigkeit der für diese Erfindung beschriebenen Bänder aus einem Schichtstoff durch die Zugfestigkeit der mit den Graphitfolien verbundenen Kunststoffolien bestimmt. Bei Bändern, die für das Weiterverarbeiten zu Packungsgarnen geeignet sein sollen, reicht es nach den Erkenntnissen der Erfinder nicht aus, irgendwelche Kunststoffolien zu verwenden. Für den Zweck der Erfindung müssen vielmehr Kunststoffolien gewählt werden, die eine bestimmte Mindestzugfestigkeit und einen bestimmten Mindest-Elastizitätsmodul haben und die auf irgendeine Art und Weise mit der Graphitfolie verbunden werden können. Die Zugfestigkeit dieser Kunststoffolien sollte deshalb mindestens 25 MPa und der E-Modul mindestens 0,4 GPa betragen. Vorzugsweise haben die Folien eine Zugfestigkeit von mindestens 50 MPa und einen E-Modul von mindestens 1 GPa. Für besonders zugfeste Packungsschnüre beträgt die Zugfestigkeit mindestens 140 MPa und der E-Modul mindestens 2,5 GPa. Da es wegen der Vermeidung von Gleit-, Schrumpfungs- und Zersetzungsprozessen während des Gebrauchs der Packungen und Dichtungen bei extremen Einsatzbedingungen wie hohen Temperaturen und unter korrosiven Bedingungen und gegebenenfalls unter großen Dichtpressungen, für die ja Graphitpackungen und -Dichtungen besonders geeignet sind, wichtig ist, den Anteil an Kunststoffolien möglichst gering zu halten, ist die Dicke der Kunststoffolien in der Packungsschnur auf 50 µm begrenzt, bevorzugt beträgt sie 30 µm und weniger. Die für das Herstellen des Schichtstoffes und der Bänder aus dem Schichtstoff verwendeten Graphitfolien dürfen nicht zu locker aufgebaut sein und sie dürfen auch nicht zu steif sein. Wären sie, auch bei ihrer Kopplung mit den Kunststoffolien in den Schichtstoffbändern, zu locker oder mechanisch zu wenig fest, würden sie zu stark zum Abbröckeln neigen. Wären sie zu steif, wären sie für das Verarbeiten und den Gebrauch nicht flexibel genug. Sie dürfen, um noch genügend flexibel zu sein, auch nicht zu dick sein. Deshalb ist ihre Dicke auf höchstens 2 mm und bevorzugt auf kleiner als 1 mm und ihre Rohdichte auf den Bereich von 0,7 bis 1,8 g/cm³ und bevorzugt auf den Bereich von 1,0 bis 1,4 g/cm³ begrenzt. Die Schichtstoffbänder, aus denen das Packungsgarn hergestellt wird, sollen nicht breiter als 5 mm und vorzugsweise nicht breiter als 3 mm sein, damit sie problemlos miteinander nach den vorgenannten textilen Verfahren, insbesondere durch Verdrillen oder Verflechten verarbeitet werden können. Für bestimmte Anwendungsfälle sind auch Breiten von 2 mm und weniger vorteilhaft.

Um die Hochtemperaturfestigkeit der Packungsgarne zu sichern und um Korrosionen der an die Packungen aus den erfindungsgemäßen Packungsgarnen angrenzenden Werkstoffe zu verhindern, darf der flexible Graphit in den Packungsgarnen nur einen geringen Gehalt an Verunreinigungen haben. Im allgemeinen soll der Kohlenstoffgehalt der Graphitfolien mindestens 96 Gewichtsprozent und vorzugsweise mindestens 99 Gew.-% betragen.

Die Bänder, aus denen die Packungsgarne durch textile Verfahren hergestellt werden, können aus einer Lage Graphitfolie und aus einer mit der Graphitfolie verbundenen Lage einer Kunststoffolie bestehen. Es ist jedoch häufig günstiger, mehr als eine Lage flexiblen Graphits mit mehr als einer Lage Kunststoffolie zu einem Schichtstoff zu kombinieren. In einem solchen Schichtstoff folgt auf jede Lage Graphitfolie eine Lage Kunststoffolie und alle Folien sind miteinander verbunden. Wie viele Folien übereinander angeordnet werden, richtet sich nach den jeweiligen praktischen Gegebenheiten und dem Herstellungsaufwand. Im allgemeinen werden nicht mehr als sechs Graphitfolien in geeigneter Weise mit Kunststoffolien zu einem Schichtstoff kombiniert. Bevorzugte Schichtstoffe enthalten 2 bis 4 Graphitfolien. Die äußeren Flachseiten der Graphitfolien der Schichtstoffe können frei von jeder Bedeckung sein. Es können jedoch sowohl eine oder beide dieser zwei Flachseiten eine Kunststoffolie tragen und mit dieser verbunden sein. Welche der drei Varianten gewählt wird, hängt vom späteren Einsatzzweck der aus den Packungsgarnen hergestellten Packung ab. Als obere und/oder untere Bedeckung der äußeren Flachseiten der außen liegenden Graphitfolien des Schichtstoffes und der aus dem Schichtstoff hergestellten Bänder werden bevorzugt Folien aus der Gruppe der perfluorierten polymeren Kohlenwasserstoffe, insbesondere Polytetrafluorethylen, Tetrafluorethylen-perfluorpropylen-Copolymerisat verwendet. Folien aus diesen Werkstoffen haben eine ausgezeichnete Chemikalienbeständigkeit, eine gute Temperaturbeständigkeit und ausgezeichnete Gleiteigenschaften. Sie fügen sich deshalb ausgezeichnet in das Leistungsspektrum des flexiblen Graphits ein und verhindern das Ankleben der Graphitpackungen an den den Packungsraum begrenzenden Werkstoffen. Wo es geeignet erscheint, können die außen liegenden Flachseiten der Graphitfolien des Schichtstoffs auch mit anderen Polymerfolien bedeckt sein.

Als verstärkend wirkende Folien sind alle Kunststoffolien geeignet, die die vorgenannten Bedingungen für die Zugfestigkeit und den E-Modul erfüllen und die mit den Graphitfolien verbunden werden können. Bevorzugte Kunststoffolien dieser Art bestehen aus Polyimid, Polyester oder es sind Kunststoffe aus der Gruppe der perfluorierten polymeren Kohlenwasserstoffe. Besonders gute Zugfestigkeiten der Bänder lassen sich bei Verwendung von Folien aus gerecktem Polytetrafluorethylen als Verstärkungsmittel erreichen.

Die Kunststoffolien können mit den Graphitfolien durch Kleber oder ohne Verwendung von Klebern verbunden sein. Welche der möglichen Verbindungsarten im Einzelfall gewählt wird, muß vom Fachmann durch einfach durchzuführende Versuche ermittelt werden. Es können alle Kleber verwendet werden, die die Oberflächen der Graphitfolien und der Kunststoffolien benetzen. Die durch das Verkleben erzielte Verbindungsfestigkeit muß mindestens so stark sein, daß das Verarbeiten des durch das Verkleben hergestellten Schichtstoffes zu Bändern und das Weiterverarbeiten der Bänder zu den Packungsgarnen gewährleistet ist. Es können beispielsweise Kleber auf Acrylat-, Polyamid-, Polysiloxan-, Polyurethanbasis und acetylierte organische Polymere sowie Epoxidharz- und Phenolharzkleber verwendet werden.

Das kleberfreie Verbinden der Graphitfolien mit den Kunststoffolien läßt sich bei Temperaturen, die nahe am oder im Erweichungsbereich der Kunststoffolien liegen und bei gleichzeitigem Anwenden eines moderaten Anpreßdruckes von mindestens 0,1 MPa und vorzugsweise von 0,5 bis 6 MPa erreichen. Auf diese Weise lassen sich sowohl Polyester-, Polyimid- und Fluorpolymerfolien mit den Graphitfolien verschweißen.
Die Graphitfolien können mit den Kunststoffolien auch mit Hilfe des Verfahrens entsprechend EP 0 616 884 B1, das ohne Anwendung von Klebstoffen arbeitet, bei dem aber ein spezieller Haftvermittler eingesetzt wird, verbunden werden. Im Sinne der vorliegenden Erfindung soll dieses Verfahren zum Verbinden der Graphitfolien mit den Kunststoffolien auch als kleberfreies Verfahren gelten.

Die durch ein textiles Verarbeitungsverfahren wie beispielsweise Flechten oder insbesondere Verdrillen von zwei oder mehr Schichtstoffbändern erhaltenen Packungsgarne können direkt zu Packungen weiterverarbeitet werden. Sie können aber auch z.B. durch Verdrillen oder Flechten zunächst zu Packungsschnüren weiterverarbeitet werden, aus denen dann nach bekannten Methoden Packungen hergestellt werden. Statt Schichtstoffbänder mit im wesentlichen planen Oberflächen für die Garnherstellung einzusetzen, können solche Bänder mit planen Oberflächen vor dem Verdrillen oder Verflechten miteinander, zunächst jedes für sich allein verdrillt werden und es können dann solche bereits in sich verdrillten Bänder allein oder in Mischung mit unverdrillten Bändern zu Packungsgarnen verarbeitet werden. Da die Oberfläche der Packungsgarne nach ihrer Herstellung, beispielsweise durch Verdrillen oder Verflechten, für die meisten Verwendungsfälle nicht gleichmäßig genug ist, werden sie vor dem Weiterverarbeiten noch kalibriert. Bei diesem Vorgang, der mit einer der bekannten Vorrichtungen durchgeführt werden kann, werden die Packungsgarne und in ihnen die Schichtstoffbänder, weiter verdichtet und die Packungsgarne erhalten den für die weitere Verwendung erforderlichen oder gewünschten Querschnitt, der vorzugsweise rund, elliptisch, oval, rechteckig oder quadratisch ist.

Im folgenden wird die Erfindung anhand von Ausführungsbeispielen weiter erläutert:

### Beispiel 1

Eine 500 mm breite, 50 m lange und 0,2 mm dicke Graphitfolienbahn mit einer Rohdichte von 1,2 g/cm³ wurde in einem quasikontinuierlichen Verfahren in einer Kaschiermaschine (Fabrikat Billhöfer Maschinenfabrik, Nürnberg) auf einer ihrer Flachseiten mittels einer Kleberauftragswalze und einem Abstreifrakel mit einem wässrigen Zweikomponenten-Acrylatkleber, der die durch die Rezeptur vorgeschriebene Menge Härter enthielt (Kleber und Härter von Fa. Morton International GmbH, Bremen) gleichmäßig beschichtet. Die mit dem härterhaltigen Kleber beschichtete Graphitfolienbahn wurde sodann in der gleichen Anlage mit einer ebenfalls 500 mm breiten und 12 µm dicken Polyesterfolie (Mylar, Typ A, Lieferant, Du Pont Electronics, Genf) vollflächig bedeckt, über eine auf ca 70°C temperierte Aushärtwalze geleitet und dann mittels einer Andruckwalze mit der Polyesterfolienbahn verklebt. Der beschriebene Laminiervorgang wurde unter jeweiliger Verwendung der zuvor hergestellten Schichtstoffbahn so oft abwechselnd mit weiteren Lagen Graphitfolie und Polyesterfolie wiederholt, daß als Endprodukt eine Schichtstoffbahn mit einer Gesamtlänge von 50 m, einer Breite von 500 mm und einer Gesamtdicke von 0,9 mm mit folgender Abfolge der miteinander verbundenen Schichten erhalten wurde: 1. Graphitfolie, 2. Polyesterfolie, 3. Graphitfolie, 4. Polyesterfolie, 5. Graphitfolie, 6. Polyesterfolie, 7. Graphitfolie. Diese Schichtstoffbahn wurde dann in schmale Streifen von ca. 1,5 mm Breite zerteilt. Dazu wurde die 500 mm breite Bahn zunächst auf einer Längsschneidmaschine (Hersteller HSM, Bad Oeynhausen) zu Bändern von 50 mm Breite und dann auf einer Schneidmaschine mit Rollenmessern (Fa. JOMRO Textiltechnik GmbH, Eschwege) zu 1,5 mm breiten Bändern geschnitten. Entsprechende Verfahren wurden auch in den folgenden Ausführungsbeispielen zum Herstellen von schmalen Schichtstoffbändern angewandt. Jeweils drei dieser 1,5 mm breiten Bänder aus dem Schichtstoff wurden auf einer Laborverdrillanordnung so zu einem Garn verdrillt, daß das Garn ca. 40 Wicklungen pro Meter Garnlänge aufwies. Die so hergestellten Garne, die noch eine unebene Oberfläche hatten, wurden anschließend durch eine Kalibriervorrichtung mit rundem Walzenquerschnitt geführt. Es wurden flexible und zugfeste Packungsgarne mit einem Durchmesser von 2,3 mm erhalten, die zum Herstellen von Packungsschnüren durch Verdrillen oder Flechten oder direkt zum Herstellen von Packungen nach einem der bekannten Verfahren geeignet waren. Zugversuche an dem fertigen Garn von 2,3 mm Durchmesser ergaben bei einer Probenlänge von 800 mm, einer freien Einspannlänge von 200 mm und einer Abzugsgeschwindigkeit von 50 mm/min eine Zugfestigkeit von 9,3 MPa. Für die Durchführung der Prüfung wurde eine Zugprüfmaschine der Firma Zwick, Ulm, unter Verwendung von Spannköpfen Typ 8314 (Hersteller, Zwick) verwendet. Dieses Verfahren zum Bestimmen der Zugfestigkeit der Garne wurde auch für die unter den folgenden Ausführungsbeispielen beschriebenen Garne angewendet. Zum Bestimmen des Gewichtsverlusts und der Wärmebeständigkeit wurden Teile eines solchen Garnes in einem Umluftofen eine Stunde lang 300 °C heißer Luft ausgesetzt. Danach betrug der Gewichtsverlust 1,5 %.

### Beispiel 2

In diesem Beispiel wurde die gleiche Anzahl Graphitfolienbahnen der gleichen Abmessungen und der gleichen Qualität mit der gleichen Anzahl Bahnen aus Polyesterfolie der gleichen Abmessungen und der gleichen Qualität wie in Ausführungsbeispiel 1 miteinander laminiert. Im Unterschied zur Verfahrensweise nach Beispiel 1 wurden die verschiedenen Folienbahnen entsprechend dem im Europäischen Patent Nr. 0 616 884 B1 beschriebenen Verfahren miteinander verbunden. Dazu wurde zunächst in separaten Arbeitsschritten jede der Graphitfolienbahnen im Tauchverfahren durch die Lösung eines Haftvermittlers, der aus einer Mischung aus einem Siloxan und einem Fettalkohol (Bezugsquelle, Wacker Chemie GmbH, München) bestand, gezogen, die oberflächlich anhaftende Menge an Haftvermittlersubstanz durch Wischelemente auf das erforderliche Maß verringert und dann mit Heizstrahlern getrocknet. Nach dem Trocknen wurden die Graphitfolienbahnen wieder auf Rollen aufgewickelt. Zum Verbinden der vier Graphitfolienbahnen mit den drei Bahnen aus Polyesterfolie wurden die Bahnen synchron von einem Gestell, das insgesamt sieben Rollen (4 Graphitfolienrollen und drei Rollen Polyesterfolie) hatte, so abgezogen, daß die Folienbahnen vollflächig übereinander in folgendem Wechsel, 1. Graphitfolie, 2. Polyesterfolie, 3. Graphitfolie, 4. Polyesterfolie, 5. Graphitfolie, 6. Polyesterfolie, 7. Graphitfolie angeordnet wurden. Die so übereinander angeordneten Folienbahnen, von denen die Graphitfolien mit Haftvermittler belegt waren, wurden zum Verbinden durch eine Doppelbandpresse geführt. Die Preßtemperatur betrug 170°C, der Preßdruck (Kissendruck der Presse) betrug konstant 30 bar und die Durchlaufgeschwindigkeit 2 m/min. Die Dicke der Schichtstoffbahn betrug nach dem Verpressen 0,8 bis 0,9 mm. Wie in Beispiel 1 beschrieben, wurde die Schichtstoffbahn in zwei Stufen in Längsrichtung zu Bändern zerteilt. Die letztlich erzeugten Bänder hatten eine Breite von 2,5 mm und eine Dicke von 0,8 bis 0,9 mm. Zum Herstellen eines Packungsgarnes wurden in diesem Beispiel zwei der rechteckigen Bänder mit ca. 50 Wicklungen pro Meter Garnlänge verdrillt und das Garn danach auf einen Durchmesser von 2,5 mm kalibriert. Das erhaltene Packungsgarn war flexibel und ließ sich ohne Probleme zu Packungsschnüren verdrillen oder verflechten und auch zu Wickelpackungen verarbeiten. Die Zugfestigkeit dieses Garnes, die wie in Beispiel 1 ermittelt wurde, betrug 8,6 MPa. Vorteilhaft bei diesem Packungsgarn ist der geringere Masseverlust von nur 0,6 % nach einstündiger Behandlung bei 300 °C an Luft im Umluftofen.

### Beispiel 3

Unter Verwendung der in Beispiel 1 beschriebenen Kaschiermaschine wurde eine 280 mm breite und 0,38 mm dicke Graphitfolienbahn, die eine Rohdichte von 1,1 g/cm³ hatte, zunächst mit einem Kleber auf der Basis eines Polyamids (AQ Nylon, Fa. Toray, Japan) einseitig belegt und sodann vollflächig mit einer 280 mm breiten und 50 µm dicken Polyimidfolie (Kapton HN 200, Hersteller Du Pont) verklebt. Danach wurde der Vorgang wiederholt, um eine weitere, gleiche Graphitfolie mit dem zuvor hergestellten Schichtstoff aus Polyimid- und Graphitfolie so zu verbinden, daß eine Schichtstoffbahn mit dem Aufbau Graphitfolie-Polyimidfolie-Graphitfolie entstand. Diese Schichtstoffbahn hatte eine Gesamtdicke von ca. 0,8 mm. Um aus dieser Bahn schmale Bänder herzustellen, wurde sie nach dem in Beispiel 1 beschriebenen Verfahren längs so geteilt, daß schließlich Einzelbänder des Schichtstoffs von 2 mm Breite erhalten wurden. Zum Herstellen eines Packungsgarnes wurden vier derartige Einzelbänder so miteinander verdrillt, daß das resultierende Packungsgarn ca. 40 Wicklungen pro laufenden Meters aufwies. Nach dem Verdrillen wurde das Packungsgarn noch auf einen Durchmesser von 3,0 mm kalibriert. Die Zugfestigkeit des Packungsgarnes betrug 8,0 MPa. Nach der einstündigen Behandlung des Packungsgarns im Umluftofen bei 300 °C in Luft wurde ein Masseverlust von 0,4 % gemessen. Das Packungsgarn war flexibel und konnte nach allen üblichen Verfahren zu Packungsschnüren und Packungen verarbeitet werden.

### Beispiel 4

In diesem Ausführungsbeispiel wurde wieder eine Schichtstoffbahn hergestellt, die aus zwei Graphitfolien mit einer Dicke von 0,38 mm und einer Rohdichte von 1,1 g/cm³ und einer Polyimidfolie Kapton KJ (Hersteller, Du Pont) bestand, die sich zwischen den beiden Graphitfolien befand. Die Polyimidfolie hatte eine Dicke von 25 µm. In diesem Falle wurde die Verbindung zwischen den einzelnen Folienlagen jedoch ohne Verwendung eines Klebers oder Haftvermittlers allein durch Verschweißen der Polyimidfolie mit den Graphitfolien hergestellt. Dazu wurden die vollflächig übereinander angeordneten Folien bei einer Temperatur von 380 °C (Kissentemperatur) unter einem Druck von 30 bar mit einer Durchlaufgeschwindigkeit von 0,5 m/min durch eine Doppelbandpresse geführt. Das weitere Verarbeiten der so hergestellten Schichtstoffbahn zu Packungsgarnen geschah wie bei Beispiel 3. Die Zugfestigkeit des Packungsgarnes betrug 4,1 MPa, sein Masseverlust bei der einstündigen Behandlung mit auf 300 °C erhitzter Luft im Umluftofen lag vorteilhafterweise unter 0,1 %. Das Packungsgarn war flexibel. Seine Zugfestigkeit reichte noch aus, um es zu Packungsschnüren und Packungen weiterzuverarbeiten.

### Beispiel 5

Für dieses Ausführungsbeispiel wurden zwei Graphitfolien mit einer Breite von 280 mm, einer Dicke von 0,25 mm und einer Rohdichte von 1,0 g/cm³ mit einer zwischen ihnen liegenden Polyimidfolie Kapton HN 200 (Hersteller Du Pont) mit einer Breite von 280 mm und einer Dicke von 50 µm entsprechend dem Verfahren gemäß EP 0 616 884 B1 miteinander verbunden. Dazu wurde die Bahn aus Polyimidfolie durch ein Bad aus einer Haftvermittlerlösung, die aus einer Siloxan-Fettalkoholmischung, (Lieferer, Wacker Chemie, München) bestand, gezogen und es wurde der auf den beiden Seiten der Polyimidfolie haftende Haftvermittler mittels Abstreifleisten und Verteilerrollen gleichmäßig in dünner Schicht auf den Oberflächen der Kunststoffolie verteilt und es wurden danach die Oberflächen der Kunststoffolie mittels Heizstrahlern getrocknet. Danach wurden die zwei Graphitfolienbahnen so zugeführt, daß sie die Polyimidfolie beidseitig und vollflächig bedeckten.
Anschließend wurden die noch nicht fest miteinander verbundenen Folien mittels Heizkacheln auf ca. 200 °C aufgeheizt und dann durch drei Walzenpaare geführt, die auf eine Temperatur von ca. 180 °C temperiert waren. Der auf die Schichtstoffbahn einwirkende Druck der Walzen war dabei so eingestellt, daß die fertige Schichtstoffbahn eine Dicke von 0,4 mm aufwies. Anschließend wurde die Schichtstoffbahn, wie bereits in den vorhergehenden Beispielen beschrieben worden ist, längs in Bänder mit einer Breite von 1,5 mm geschnitten.
Jeweils sechs der so hergestellten Schichtstoffbänder wurden zu einem Garn verdrillt und dieses Garn sodann auf einen Durchmesser von 2,2 mm kalibriert. Die Zugfestigkeit dieses Garns betrug 14,7 MPa. Sein Masseverlust im Umluftofen bei einstündiger Behandlung in 300 °C heißer Luft belief sich auf 0,35 %. Das Garn war noch hinreichend flexibel. Es ließ sich ohne weiteres zu Packungsschnüren verdrillen und flechten und auch direkt zu Packungen verarbeiten.

### Beispiel 6

Zwischen zwei Graphitfolien mit einer Breite von 300 mm, einer Dicke von 0,2 mm und einer Rohdichte von 1,2 g/cm³ wurde eine Folie aus unidirektional gerecktem Polytetrafluorethylen, die eine Breite von ca. 300 mm und eine Dicke von 30 µm hatte (Versuchsprodukt der Fa. Nitto Denko, Japan), so angeordnet, daß sich die Folien vollflächig berührten. Die so angeordneten Folien wurden sodann entsprechend dem in Beispiel 4 im Prinzip beschriebenen Verfahren unter Verwendung einer Doppelbandpresse miteinander verschweißt. Die Kissen der Presse hatten eine Temperatur von 380 °C, der Preßdruck betrug 30 bar und die Durchlaufgeschwindigkeit der übereinandergelegten Folien 1 m/min. Die so erhaltene Schichtstoffbahn wurde dann, wie in den vorhergehenden Beispielen beschrieben, längs zu Schichtstoffbändern von 1 mm Breite geschnitten. Jeweils 7 der so erhaltenen Bänder wurden zu Packungsgarnen mit 50 Wicklungen pro laufendem Meter Packungsgarn verdrillt. Die Zugfestigkeiten dieser Packungsgarne lagen bei 10,5 MPa. Ihr Masseverlust nach der einstündigen Behandlung im Umluftofen in 300 °C heißer Luft betrug weniger als 0,1 %. Die Packungsgarne dieses Typs waren hoch flexibel. Sie ließen sich sehr gut zu Packungsschnüren und zu Packungen verarbeiten.

### Beispiel 7

Die hier beschriebene Schichtstoffbahn bestand aus einer Graphitfolie mit einer Dicke von 0,5 mm, einer Breite von 1430 mm und einer Rohdichte von 1,0 g/cm³, die auf ihren beiden Flachseiten vollflächig mit je einer Polytetrafluorethylenfolie TFM 1700 (Fa. Dyneon, Burgkirchen) mit einer Breite von 1430 mm und einer Dicke von 50 µm durch Verschweißen verbunden war. Das Verschweißen geschah entsprechend dem Verfahren, das prinzipiell in den Beispielen 4 und 6 beschrieben worden ist. Im vorliegenden Beispiel wurde mit einem Kissendruck von 30 bar, mit einer Kissentemperatur von 380 °C und mit einer Durchlaufgeschwindigkeit von 3,5 m/min gearbeitet. Die nach dem Verschweißen erhaltene Schicht stoffbahn wurde in Längsrichtung zu Schichtstoffbändern mit einer Breite von 2 mm geschnitten. Danach wurden jeweils 4 solcher Schichtstoffbänder zusammengefaßt und so verdrillt, daß das dabei erhaltene Packungsgarn 35 Wicklungen pro laufendem Meter Packungsgarn aufwies. Dieses Packungsgarn wurde sodann auf einen Durchmesser von 2,5 mm kalibriert. Das Packungsgarn hatte eine Zugfestigkeit von 16 MPa und einen Masseverlust nach einstündiger Behandlung bei 300 °C in Luft im Umluftofen von weniger als 0,1 %. Aufgrund seiner Flexibilität und Zugfestigkeit ließ es sich wie die anderen in den Beispielen 1 bis 7 beschriebenen Packungsgarne ohne Probleme zu Packungsschnüren verdrillen oder verflechten oder direkt zu Packungen verarbeiten.

Nachfolgend wird der generelle Herstellungsgang eines Packungsgarnes anhand des in Tabelle 1 wiedergegebenen Schemas beschrieben.

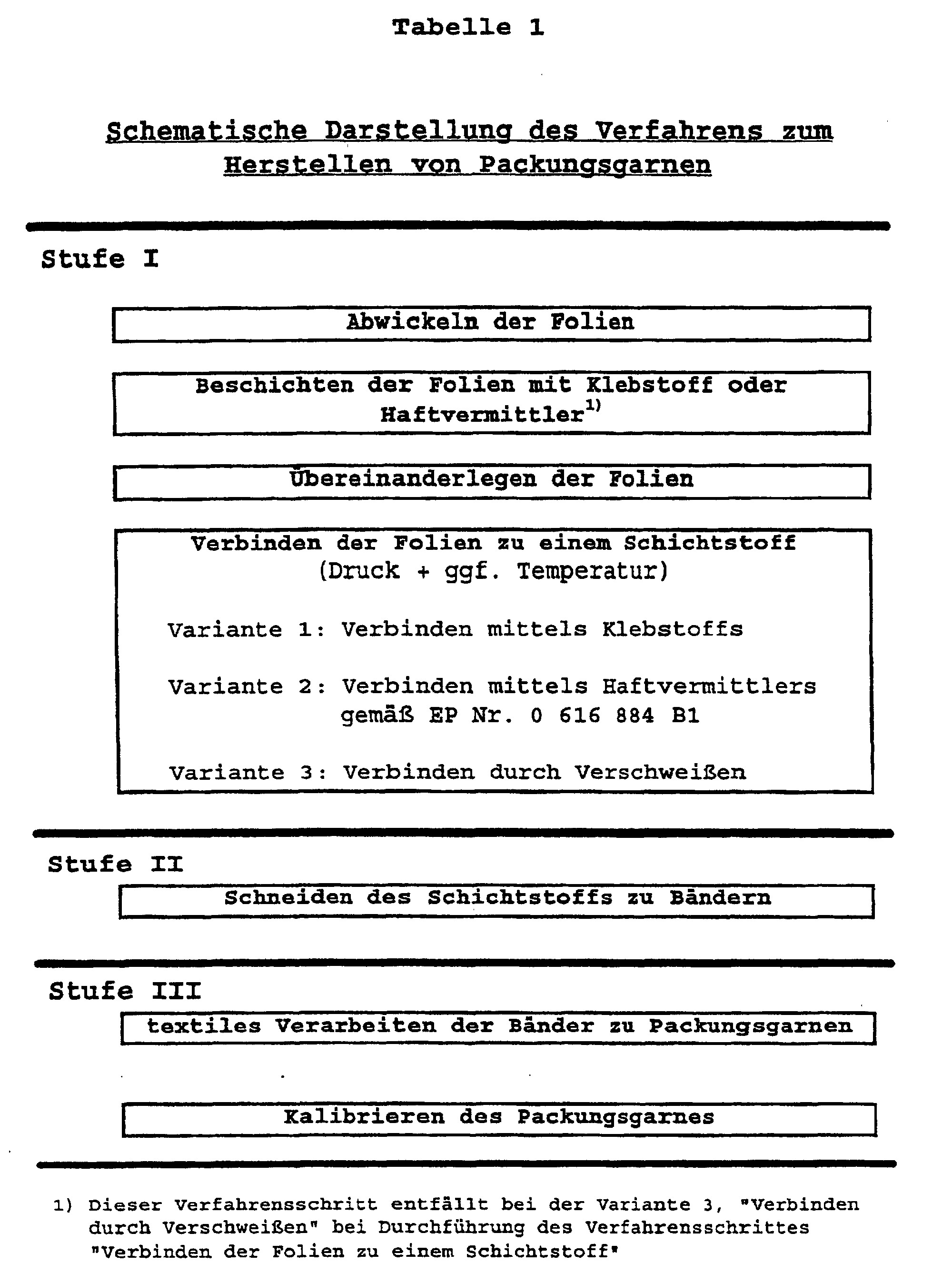

Generell besteht der Herstellungsgang aus drei Stufen: In einer ersten Verfahrensstufe wird ein Schichtstoff hergestellt, aus dem in einer zweiten Verfahrensstufe Bänder produziert werden, die in einer dritten Verfahrensstufe zu einem Packungsgarn verarbeitet werden.
In der ersten Verfahrensstufe werden Lagen aus Graphitfolie im regelmäßigen Wechsel mit Lagen der verstärkenden Kunststoffolie so übereinander angeordnet, daß sich die Lagen aus den verschiedenen Folienarten stets vollständig bedecken. Es kann aber auch nur eine Lage Graphitfolie mit nur einer oder mit zwei Lagen Kunststoffolie verbunden werden.
Zweckmäßigerweise werden dazu die Kunststoff- und die Graphitfolien von Rollen abgewickelt und ohne sie zu Stücken bestimmter Länge zu zerschneiden, in einem kontinuierlichen Verfahren weiterverarbeitet. Sie können jedoch auch in Bahnen bestimmter Länge geschnitten werden und diskontinuierlich oder quasi diskontinuierlich zu Packungsgarnen weiterverarbeitet werden. Letzteres Verfahren wird jedoch seltener angewandt.
Die Folien können mittels Klebstoffen oder entsprechend dem Verfahren gemäß Europäischem Patent Nr. 0 616 884 B1 oder durch Verschweißen miteinander verbunden werden.
Falls die Folienlagen mittels eines Klebstoffes miteinander verbunden werden sollen, muß vor dem Aufeinanderlegen mindestens eine der zwei Folienflächen, die miteinander verbunden werden sollen, mit dem Klebstoff versehen werden. Der Klebstoff muß möglichst dünn auf die Flächen aufgetragen werden. Als Klebstoffe eigenen sich vorzugsweise Kleber aus der Gruppe Acrylate, Polysiloxane, Polyurethane, Polyamide, acetylierte organische Polymere, Epoxid- und Phenolharze. Zum Verbinden wird das Folienpaket einem Druck von mindestens 0,1 MPa, und von höchstens 5 MPa und bei Verwendung von thermisch härtbaren Klebern zusätzlich der zum Härten erforderlichen Temperatur ausgesetzt. Wenn das Verbinden nach dem Verfahren gemäß EP 0 616 884 B1 geschehen soll, wird auf mindestens eine der zu verbindenden Folien eine die Haftung vermittelnde Substanz aufgetragen. Beim Auftragen muß jedoch auf das Erzeugen einer sehr dünnen Schicht der die Haftung vermittelnden Substanz und auf deren besonders gleichmäßige Verteilung geachtet werden. Das Verbinden selbst wird bei diesem Verfahren unter einem Druck von mindestens 0,5 MPa und einer Mindesttemperatur von 130 °C durchgeführt. Beim Verschweißen werden die zu verbindenden Lagen ohne Belegen der zu verbindenden Oberflächen mit einem Klebstoff oder Haftvermittler bei den erforderlichen Temperatur- und Druckbedingungen verbunden. Beim Verbinden der Graphitfolien mit den Polyesterfolien wendet man dazu Temperaturen im Bereich von 240 bis 270 °C und einen Druck von mindestens 0,1 MPa, vorzugsweise von 3 MPa an. Wenn die Graphitfolien mit Kunststoffolien aus der Gruppe Polyimid und perfluorierten Polymeren verbunden werden sollen, sind Temperaturen im Bereich von 350 bis 380 °C und es ist ein Druck von mindestens 0,1 MPa, bevorzugt von 2 bis 3 MPa erforderlich. Im einfachsten Fall wird nur eine Lage Graphitfolie auf einer oder auf beiden ihrer Flachseiten mit einer Kunststoffolie verbunden. Vorzugsweise werden jedoch mehr als eine Lage Graphitfolien mit mehr als einer Kunststoffolie zu einem Schichtstoff verbunden. Die verwendeten Kunststoffolien müssen eine Zugfestigkeit von mindestens 25 MPa und einen Elastizitätsmodul von mindestens 0,4 GPa aufweisen.
Die in Verfahrensstufe 1 hergestellten Schichtstoffe werden in Verfahrensstufe 2 mittels Schneideinrichtungen wie beispielsweise Rollenmessersätzen längs zu Schichtstoffbändern von einer Breite geschnitten, die für das Weiterverarbeiten in Verfahrensstufe 3 erforderlich ist. Die so hergestellten Bänder können entweder direkt im kontinuierlichen Verfahren weiterverarbeitet werden oder sie werden einzeln oder zu mehreren zusammengefaßt auf Spulen aufgewickelt.
In Verfahrensstufe 3 werden die in Verfahrensstufe 2 hergestellten Bänder nach einem der bekannten Verfahren zu Packungsgarnen verarbeitet. Vorzugsweise bedient man sich hierbei des Verdrillens. Wo dies jedoch erforderlich ist, kann auch verflochten oder ein anderes Verfahren angewandt werden. Die rohen Packungsgarne haben noch eine vergleichsweise unebene Oberfläche. Um diese zu glätten und die Garne noch weiter zu verdichten, werden sie in den meisten Fällen noch auf einen bestimmten Querschnitt hin kalibriert. Es ist jedoch auch möglich, unkalibrierte Packungsgarne weiterzuverarbeiten.

Im Folgenden wird die Erfindung anhand von Figuren in lediglich schematischer, nicht maßstabgetreuer Darstellung beispielhaft weiter beschrieben.

Es zeigen:
Figur 1: Die schematische Darstellung eines kontinuierlichen oder teilkontinuierlichen Verfahrens zum Herstellen von erfindungsgemäßen Packungsgarnen.
Figur 2: Einen Querschnitt durch ein geklebtes Schichtstoffband aus einer Lage flexiblen Graphits und einer Kunststoffolie. Die Verbindung zwischen den Komponenten wurde durch Verkleben oder mittels eines Haftvermittlers hergestellt.
Figur 3: Einen Querschnitt durch ein Schichtstoffband aus einer Lage flexiblen Graphits und einer Kunststoffolie. Die Lage flexiblen Graphits und die Kunststoffolie sind miteinander verschweißt.
Figur 4: Einen Querschnitt durch ein Schichtstoffband aus zwei Lagen flexiblen Graphits, zwischen denen sich eine Lage Kunststoffolie befindet, die mit den Graphitlagen durch einen Kleber verbunden ist.
Figur 5: Einen Querschnitt durch ein Schichtstoffband aus drei Lagen flexiblen Graphits und drei Lagen Kunststofffolie, in dem die Lagen miteinander verschweißt sind.
Figur 6: Einen Querschnitt durch ein Schichtstoffband aus vier Lagen flexiblen Graphits und fünf Lagen Kunststofffolie, wobei die äußeren Decklagen, d.h. die obere und die untere Decklage, aus einer anderen Kunststoffolie besteht als die zwischen den Graphitlagen befindlichen Kunststofffolien. Die Lagen sind miteinander verschweißt.
Figur 7: Einen Querschnitt durch ein Schichtstoffband aus zwei Lagen Graphitfolien und zwei Lagen Kunststoffolien, wobei die Lagen aus flexiblem Graphit und aus Kunststofffolien durch einen Klebstoff miteinander verbunden sind.

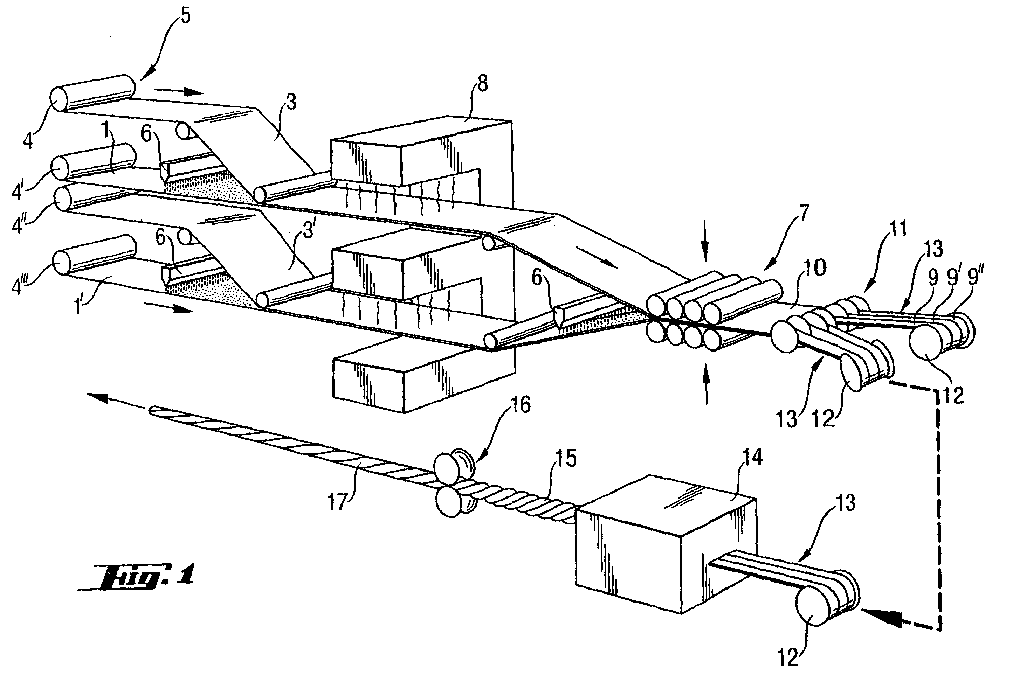

Beim bevorzugt angewandten kontinuierlichen oder teilkontinuierlichen Verfahren gemäß Figur 1 werden die Graphitfolien 1, 1' und die Kunststoffolien 3, 3', die miteinander verbunden werden sollen, von Rollen 4, 4', 4'', 4''', die in einem Rollengestell 5 in geeigneter Weise angeordnet sind, simultan so abgerollt, daß die Folien 1, 1', 3, 3' genau übereinander gelegt und miteinander verbunden werden können. Für den Fall, daß das Verbinden durch Verkleben oder nach dem Verfahren gemäß EP 0 616 884 B1 durchgeführt werden soll, muß vor dem Übereinanderlegen der Folien 1, 1', 3, 3' mindestens eine der zwei jeweils miteinander zu verbindenden Oberflächen mit einem dünnen Belag Klebstoffs oder Haftvermittlers belegt werden. Dies kann beispielsweise durch Sprüh- oder Wischeinrichtungen 6 oder durch Auftragewalzen oder Kombinationen davon geschehen. Wo es.die Konsistenz des Klebers oder Haftvermittlers zuläßt, kann das Auftragen auch durch Tauchen geschehen. Beim Verbinden durch Verschweißen entfallen derartige Auftragsvorrichtungen. Das Verbinden geschieht auf Walzenstühlen 7 oder Bandpressen, die entweder, wo dies notwendig ist, selbst heizbar sind oder vor denen eine Heizeinrichtung 8 wie z.B. ein Ofen angeordnet ist, mittels der die Folien 1, 1', 3, 3' oder das Gelege aus den Folien 1, 1', 3, 3' auf die zum Verbinden erforderliche Temperatur aufgeheizt wird. Für das nicht wiedergegebene Herstellen von Schichtstoffen aus einer größeren Anzahl Lagen aus Graphit- und Kunststofffolien oder wo dies aus anderen Gründen sachdienlich ist, können auch in einem vorgeschalteten Produktionsschritt Schichtstoffe aus wenigen Folienlagen hergestellt werden und es kann dann durch Verbinden solcher vorfabrizierter Schichtstoffe der zum Weiterverarbeiten zu den Bändern bestimmte Schichtstoff gefertigt werden.
Zum Herstellen der Bänder 9, 9', 9'' aus den Schichtstoffen 10 aus Graphit- 1, 1' und Kunststoffolien 3, 3' wird der jeweilige Schichtstoff 10 in der gemäß Tabelle 1 zweiten Verfahrensstufe mittels üblicher Schneideinrichtungen 11 in Längsrichtung zu Bändern 9, 9', 9'' der gewünschten Breite, die vorteilhafterweise unter 5 mm liegt, geschnitten. Bei der kontinuierlichen Verfahrensweise ist dieser Schneidvorgang mit dem vorhergehenden Prozeß des Herstellens des Schichtstoffes 10 aus den Folien 1, 1', 3, 3' direkt gekoppelt. Aus praktischen Gründen kann das Zerteilen der Schichtstoffbahnen zu Bändern mit der für das Herstellen der Garne gewünschten Breite, besonders bei Vorliegen von Schichtstoffen größerer Breite in zwei Stufen geschehen: Zuerst wird die Schichtstoffbahn in Breiten mittlerer Größe zerteilt und es werden dann diese Bahnen mittlerer Breite auf die gewünschte endgültige Breite der Bänder zugeschnitten. Letzteres Verfahren ist in Figur 1 nicht dargestellt. Das Zerschneiden geschieht mit üblichen Schneideinrichtungen 11, bevorzugt kontinuierlich mit Hilfe von Messerwalzen. Die so erzeugten Bänder 9, 9', 9'' werden entweder jedes für sich auf Spulen 12 aufgewickelt, um in einem nachfolgenden, abgekoppelten Verfahrensschritt weiterverarbeitet zu werden oder sie werden, und dies ist in Figur 1 ebenfalls nicht wiedergegeben, direkt in einem kontinuierlichen Verfahren in der gemäß Tabelle 1 dritten Verfahrensstufe zu der für das nachfolgende textile Verarbeiten durch Verflechten, Verstricken oder, bevorzugt, durch Verdrillen erforderlichen Anzahl von Bändern zusammengefaßt und zu einem Packungsgarn 15 verarbeitet. Wenn das textile Verarbeiten durch Verdrillen geschehen soll, ist es vorteilhaft, bereits nach dem Schneiden die für das Verdrillen benötigte Anzahl an Bändern 9, 9', 9'' auf eine Spule 12 aufzuwickeln. Beim Verdrillen muß dann nur mehr der aus der vorgegebenen Anzahl an Bändern 9, 9', 9'' bestehende Strang 13 von der Spule 12 abgezogen und verdrillt werden. Das Verdrillen geschieht mittels Vorrichtungen 14 wie sie beispielsweise zum Herstellen von Seilen oder Garnen gebräuchlich sind.
Aus den so hergestellten Packungsgarnen 15 können für einfache Gebrauchsanforderungen bereits Packungen hergestellt werden. In den meisten Fällen werden die nach dem textilen Verbinden der Bänder 9, 9', 9'' erhaltenen Packungsgarne 15 jedoch noch mit Hilfe üblicher, bekannter Vorrichtungen 16 zu Packungsgarnen 17 mit streng definierter Oberflächenkontur und einem bestimmten Garnquerschnitt kalibriert. Dabei werden die Packungsgarne 15 zusätzlich verdichtet und vergleichmäßigt.

Der Querschnitt durch ein Schichtstoffband in Fig. 2 zeigt eine Lage aus flexiblem Graphit 1 einer Dicke von 0,5 mm und einer Rohdichte von 1,0 g/cm³, der mittels einer dünnen Kleberschicht 2 auf Acrylatbasis mit einer 12 µm dicken Kunststoffolie 3 aus Polyester verbunden ist. Nach einer anderen Variante ist diese Lage aus flexiblem Graphit 1 durch das Verfahren entsprechend dem Europäischen Patent Nr. 0 616 884 B1 mit einer 50 µm dicken Polyimidfolie verbunden worden, wobei als haftvermittelnde Substanz eine Siloxan-Fettalkohol-Mischung verwendet worden ist. In diesem Schichtstoff besteht eine der Flachseiten aus Graphit 1 und die andere aus Kunststoff 3.

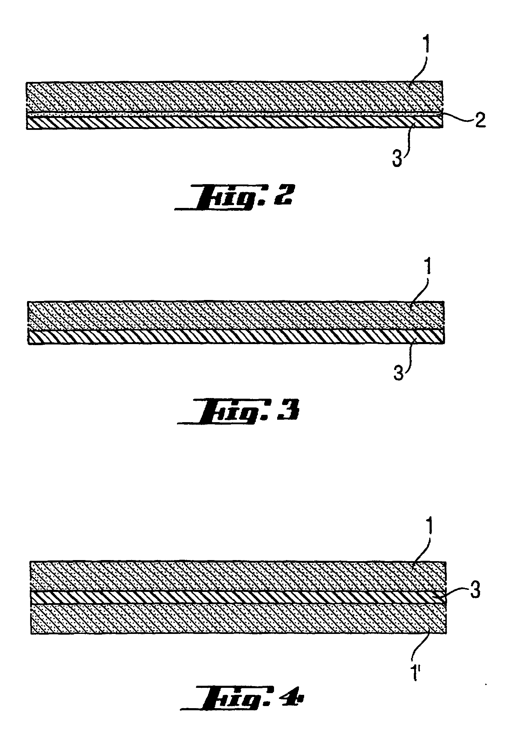

Figur 3, stellt einen Querschnitt durch ein Schichtstoffband aus einer Lage flexiblen Graphits 1 und einer 12 µm dicken Polyesterfolie 3 dar. Die Verbindung der beiden Lagen 1, 3 wurde ohne Verwendung eines Klebstoffes oder Haftvermittlers durch Verschweißen hergestellt. In diesem Schichtstoff ist bei guter Zugfestigkeit ein besonders günstiges Gewichtsverhältnis von Graphit zu Kunststoff verwirklicht. Wenn nach einer anderen möglichen Variante dieses Schichtstoffes die Kunststoffolie 3 statt aus Polyester aus PTFE bestünde, würde zwar die Zugfestigkeit des Bandes etwas zurückgehen, doch würde bei gleich gutem Graphit-Kunststoffverhältnis zusätzlich die Hitze- und Chemikalienbeständigkeit sowie die Gleitfähigkeit einer daraus hergestellten Packung wesentlich verbessert. Nach einer anderen, von Fig. 3 ableitbaren Ausführungsform kann ein entsprechender Schichtstoff aus einer mittleren Lage Graphitfolie 1, die auf ihren beiden Flachseiten durch Verschweißen mit je einer Fluorpolymerfolie verbunden worden ist, von denen in dieser Figur nur eine 3 erkennbar ist, bestehen.

Figur 4 veranschaulicht einen Querschnitt durch ein Schichtstoffband aus einer oberen 1 und einer unteren 1' Lage aus 0,38 mm dicker Graphitfolie mit einer Rohdichte von 1.1 g/cm³ zwischen denen sich eine 25 µm dicke Polyimidfolie 3 befindet, die durch Verschweißen beidseitig mit den Graphitfolien 1, 1' verbunden ist.

In Figur 5 ist eine andere Form eines Schichtstoffbandes im Querschnitt dargestellt. Es besteht aus drei Lagen 0,2 mm dicker Graphitfolie 1, 1', 1'', Rohdichte 1,2 g/cm³ und aus drei Lagen 30 µm dicker Kunststoffolie 3, 3', 3'' aus gerecktem Polytetrafluorethylen (PTFE). Die Kunststofflagen 3, 3', 3'' sind mit den Graphitlagen 1, 1', 1'' durch Verschweißen verbunden. In diesem Schichtstoff ist eine der äußeren Flachseiten der außen liegenden Graphitfolien 1, 1' frei und die andere dieser Seiten mit einer PTFE-Folie 3' bedeckt. Bänder aus diesem Schichtstoff sind hoch zugfest. Die aus ihnen hergestellten Packungen sind in hohem Maße temperatur- und chemikalienbeständig und sie haben ein sehr günstiges Massenverhältnis von Graphit zu organischen Bestandteilen.

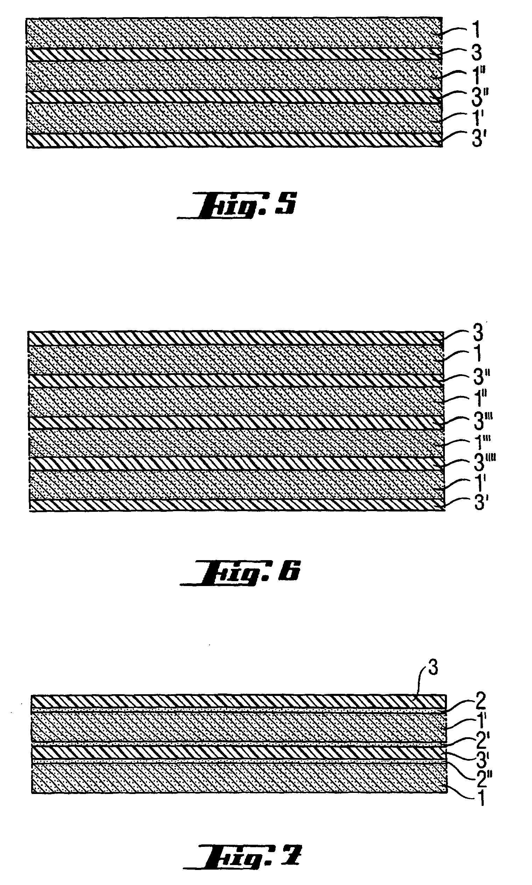

Figur 6 gibt einen Querschnitt durch ein Schichtstoffband wieder, das aus vier Lagen 0,2 mm dicker Graphitfolie 1, 1', 1'', 1''' mit einer Rohdichte von 1, 2 g/cm³ und aus fünf Lagen Kunststoffolie 3 , 3' , 3'', 3''', 3'''' besteht. Der Schichtstoff ist auf beiden Seiten von je einer 50 µm dicken Kunststoffolie aus Polytetrafluorethylen TFM 1700 3, 3' bedeckt und mit dieser durch Verschweißen verbunden. Die zwischen den Graphitlagen 1, 1', 1'', 1''' angeordneten und mit diesen ebenfalls und zwar beidseitig verschweißten Kunststoffolien 3'', 3''', 3'''' sind 12 µm dick und bestehen aus der Polyesterfolie Mylar. Neben den hervorragenden Gebrauchseigenschaften der aus solchen Schichtstoffbändern hergestellten Packungen - sie haben besonders gute Gleiteigenschaften - sei hier auf eine für derartige Schichtstoffe günstige Herstellungsweise hingewiesen. In einem gesonderten, vorgeschalteten Verfahrensschritt werden die für die obere und die untere Decklage des Schichtstoffs bestimmten Graphitfolien 1, 1' einseitig mit je einer Lage der Fluorpolymerfolie 3, 3' verschweißt. Die so vorbereiteten, bereits auf der einen Seite mit der einen Art von Kunststoffolien 3, 3' belegten Graphitfolien 1, 1' werden sodann mit den anderen Lagen andersartiger Kunststoffolie 3'', 3''', 3'''' und den restlichen Graphitfolienlagen 1'', 1''' in der vorgesehenen Reihenfolge angeordnet und miteinander verbunden. Diese Verfahrensweise kann in geeigneter Weise abgewandelt und auch für das Herstellen anders aufgebauter Schichtstoffe angewandt werden. Es ist auch besonders für das Herstellen von Schichtstoffen aus vielen Lagen Graphit- und Kunststoffolie geeignet.

Figur 7 zeigt einen Querschnitt durch ein Schichtstoffband, das aus zwei 0,35 mm dicken Graphitfolien 1, 1' mit einer Rohdichte von 1,0 g/cm³ und zwei 50 µm dicken Kunststofffolien 3, 3' aus Polyimid besteht. Die Folienlagen sind mittels eines Polysiloxanklebers 2, 2', 2'' miteinander verbunden. Eine der nach außen weisenden Oberflächen der zwei Graphitfolien 1, 1' ist mit einer Polyimidfolie 3 verbunden, die andere hat keine Bedeckung. Nach einer anderen, nicht dargestellten Variante des Schichtstoffes könnte auch die zweite in Fig. 7 noch freie Flachseite der Graphitfolie 1 mit einer hier nicht wiedergegebenen Kunststoffolie bedeckt und verbunden sein und nach einer weiteren, ebenfalls nicht dargestellten Variante könnten beide nach außen weisenden Flachseiten der Graphitfolien 1, 1' auch frei von Kunststoffolien sein.

Es ist unschwer zu erkennen, daß noch eine Vielzahl von möglichen Schichtstoffen in Abwandlung der durch die Figuren 2 bis 7 angegebenen Ausführungsformen nach der Lehre der Erfindung gebildet werden können. Demgemäß ist die Erfindung nicht auf die in den Figuren dargestellten Ausführungsformen beschränkt . Es sollen deshalb auch im Rahmen des durch die Patentansprüche bestimen Schutzumfangs, die nicht dargestellten Schichtstoffe in diese Patentanmeldung eingeschlossen sein, die der Fachmann aufgrund der ihm durch diese Offenbarung gebotenen Informationen herstellen und die er zu Packungsgarnen weiterverarbeiten könnte.

### Bezugszeichenliste

- 1;1';1'';1''';1'''': Lagen aus flexiblem Graphit
- 2;2';2'': Klebstoff oder Haftvermittler entsprechend EP-Patent Nr.0 616 884 B1
- 3;3';3'';3''';3'''': Kunststoffolie
- 4;4';4'';4''': Rollen (in Rollengestell)
- 5: Rollengestell
- 6: Bürsten oder Sprüheinrichtungen zum Auftragen von Klebstoff
- 7: Presse
- 8: Heizeinrichtung
- 9;9';9'': Bänder aus Schichtstoff
- 10: Schichtstoff, aus Folien (1;1';3;3') hergestellt
- 11: Schneideinrichtung
- 12: Spule/n zum Aufwickeln von Bändern
- 13: Strang aus drei Bändern
- 14: Verdrillvorrichtung
- 15: Packungsgarn, nicht kalibriert
- 16: Kalibriervorrichtung
- 17: Packungsgarn kalibriert

## Patentansprüche

1. Packungsgarn aus mindestens zwei nach einem Garnherstellungsverfahren miteinander verbundenen Bändern aus einem Schichtstoff, der aus alternierend angeordneten Schichten zweier flächiger Werkstoffe, die miteinander verbunden sind, besteht und zwar erstens, aus mindestens einer Lage aus flexiblem Graphit und zweitens, mindestens einer Lage eines verstärkenden Mittels,
- wobei entweder beide äußeren Flachseiten der oberen und der unteren Schicht des Schichtstoffes aus flexiblem Graphit oder nur eine dieser Flachseiten aus flexiblem Graphit oder keine dieser Flachseiten aus flexiblem Graphit besteht,
**dadurch gekennzeichnet, daß**
die Bänder (9;...) aus Schichtstoff (10) eine Breite von nicht mehr als 5 mm aufweisen und aus Lagen flexiblen Graphits (1;...), der eine Dicke von nicht mehr als 1 mm und eine Rohdichte im Bereich von 0,7 bis 1,8 g/cm³ aufweist
und aus Lagen einer Kunststoffolie (3;...) mit einer Zugfestigkeit von mindestens 25 MPa und einem Elastizitätsmodul von mindestens 0,4 GPa, bestehen.

2. Packungsgarn aus mindestens zwei nach einem Garnherstellungsverfahren miteinander verbundenen Bändern aus einem Schichtstoff, der aus einer Lage aus flexiblem Graphit, die auf mindestens einer ihrer beiden Flachseiten mit einem verstärkenden Mittel verbunden ist, besteht,
**dadurch gekennzeichnet, daß**
die Bänder (9;...) aus Schichtstoff (10) eine Breite von nicht mehr als 5 mm aufweisen und aus einer Lage flexiblen Graphits (1), der eine Dicke von nicht mehr als 1 mm und eine Rohdichte im Bereich von 0,7 bis 1, 8 g/cm³ aufweist
und aus mindestens einer Lage einer Kunststoffolie (3; 3') mit einer Zugfestigkeit von mindestens 25 MPa und einem Elastizitätsmodul von mindestens 0,4 GPa, bestehen.

3. Packungsgarn nach Patentanspruch 1 oder 2,
**dadurch gekennzeichnet, daß**
das Packungsgarn (15;17) aus mindestens zwei Bändern (9;...) besteht, von denen mindestens eins vor dem Verarbeiten zu einem Packungsgarn (15;17) für sich verdrillt worden ist.

4. Packungsgarn nach Patentanspruch 1, 2 oder 3,
**dadurch gekennzeichnet, daß**
die Bänder (9;...) aus dem Schichtstoff (10) eine Breite von nicht mehr als 3 mm und die in ihnen enthaltenen Graphitfolien (1;...), eine Dicke von nicht mehr als 0,5 mm haben.

5. Packungsgarn nach einem oder mehreren der Patentansprüche 1 bis 4,
**dadurch gekennzeichnet, daß**
die Bänder (9;...) aus dem Schichtstoff (10) eine Breite von nicht mehr als 2 mm und die in ihnen enthaltenen Graphitfolien (1;...) eine Dicke von nicht mehr als 0,35 mm haben.

6. Packungsgarn gemäß einem oder mehreren der Patentansprüche 1 bis 5,
**dadurch gekennzeichnet, daß**
die den flexiblen Graphit (1;...) verstärkende Kunststoffolie (3;...) eine Zugfestigkeit von mindestens 50 MPa und einen Elastizitätsmodul von mindestens 1 GPa hat.

7. Packungsgarn nach einem oder mehreren der Patentansprüche 1 bis 6,
**dadurch gekennzeichnet, daß**
die den flexiblen Graphit (1;...) verstärkende Kunststoffolie (3;...) eine Zugfestigkeit von mindestens 140 MPa und einen Elastizitätsmodul von mindestens 2,5 GPa hat.

8. Packungsgarn nach einem oder mehreren der Patentansprüche 1 bis 7,
**dadurch gekennzeichnet, daß**
die den flexiblen Graphit (1;...) verstärkende Kunststoffolie (3;...) eine Dicke von nicht mehr als 50 µm hat.

9. Packungsgarn nach einem oder mehreren der Patentansprüche 1 bis 8,
**dadurch gekennzeichnet, daß**
mindestens eine der zwei nach außen weisenden Flachseiten der Graphitfolien (1;...) der Bänder (9;...) von einer Folie (3;...) aus der Gruppe der perfluorierten polymeren Kohlenwasserstoffe bedeckt ist.

10. Packungsgarn nach einem oder mehreren der Patentansprüche 1 bis 9,
**dadurch gekennzeichnet, daß**
der flexible Graphit (1;...) einen Kohlenstoffgehalt von mindestens 96 Gew.-% hat.

11. Packungsgarn nach Patentanspruch 10,
**dadurch gekennzeichnet, daß**
der flexible Graphit (1;...) einen Kohlenstoffgehalt von mindestens 99 Gew.-% hat.

12. Packungsgarn nach einem oder mehreren der Patentansprüche 1 bis 11,
**dadurch gekennzeichnet, daß**
die verstärkend wirkende Kunststoffolie (3;...) eine Folie aus der Gruppe Polyester, Polyimid oder perfluorierte polymere Kohlenwasserstoffe ist.

13. Packungsgarn nach Patentanspruch 12,
**dadurch gekennzeichnet, daß**
die verstärkend wirkende Kunststoffolie (3;...) eine Folie aus gerecktem Polytetrafluorethylen ist.

14. Packungsgarn nach einem oder mehreren der Patentansprüche 1 bis 13,
**dadurch gekennzeichnet, daß**
die verstärkend wirkende Kunststoffolie (3;...) mit dem flexiblen Graphit (1;...) durch einen Kleber (2;...) verbunden ist.

15. Packungsgarn nach einem oder mehreren der Patentansprüche 1 bis 13,
**dadurch gekennzeichnet, daß**
die verstärkend wirkende Kunststoffolie (3;...) mit dem flexiblen Graphit (1;...) ohne Verwendung eines Klebers (2;...) verbunden ist.

16. Packungsgarn nach Patentanspruch 15,
**dadurch gekennzeichnet, daß**
die verstärkend wirkende Kunststoffolie (3;...) mit dem flexiblen Graphit (1;...) unter Anwendung von erhöhten Temperaturen verschweißt ist.

17. Packungsgarn nach einem oder mehreren der Patentansprüche 1 bis 16,
**dadurch gekennzeichnet, daß**
es (15;17) aus miteinander verdrillten Bändern (9;...), die aus einem Schichtstoff (10) aus mindestens einer Folie aus flexiblem Graphit (1;...) und mindestens einer Kunststoffolie (3;...) bestehen, besteht.

18. Packungsgarn nach Patentanspruch 17,
**dadurch gekennzeichnet, daß**
die miteinander verdrillten Bänder (9;...) aus bis zu sechs übereinander angeordneten Lagen aus flexiblem Graphit (1;...) bestehen, von denen jede mit mindestens einer verstärkenden Kunststoffolie (3;...) verbunden ist.

19. Packungsgarn nach Patentanspruch 17 oder 18,
**dadurch gekennzeichnet, daß**
es aus nicht mehr als 12 miteinander verdrillten, mit mindestens einer Kunststoffolie (3;...) verstärkten Bändern (9;...) aus flexiblem Graphit (1;...) besteht.

20. Packungsgarn nach einem oder mehreren der Patentansprüche 1 bis 19,
**dadurch gekennzeichnet, daß**
es (15;17) einen runden, elliptischen, ovalen oder rechteckigen Querschnitt aufweist.

21. Verfahren zum Herstellen eines Packungsgarns aus mindestens zwei Bändern aus einem Schichtstoff, der aus einer Lage flexiblen Graphits, die auf mindestens einer ihrer beiden Flachseiten mit einem verstärkenden Mittel verbunden ist, besteht,
**dadurch gekennzeichnet, daß**
- in einem ersten Schritt eine Bahn flexiblen Graphits (1) auf mindestens einer ihrer Flachseiten mit einer Kunststoffolie (3;...) mit einer Zugfestigkeit von mindestens 25 MPa und einem Elastizitätsmodul von mindestens 0,4 GPa verbunden wird,
- daß in einem zweiten Schritt der aus flexiblem Graphit (1) und mindestens einer mit dem flexiblen Graphit (1) verbundenen Kunststoffolie (3;...) bestehende Folienverbund (10) in Bänder (9;...) von nicht mehr als 5 mm Breite zerschnitten wird,
- daß in einem dritten Schritt mindestens zwei der nach dem zweiten Schritt erhaltenen Bänder (9;...) nach einem textilen Verarbeitungsverfahren zu einem Garn (15) verarbeitet werden, und
- daß das nach Schritt 3 erhaltene Garn (15) auf einen runden, elliptischen, ovalen oder rechteckigen Querschnitt kalibriert (16;17) wird.

22. Verfahren zum Herstellen eines Packungsgarns aus mindestens zwei Bändern aus einem Schichtstoff, der aus alternierend angeordneten Schichten zweier flächiger Werkstoffe, die miteinander verbunden sind, besteht, wobei der Schichtstoff erstens, aus mindestens einer Lage aus flexiblem Graphit und zweitens, mindestens einer Lage eines verstärkenden Mittels aufgebaut ist,
- wobei entweder beide äußeren Flachseiten der oberen und der unteren Schicht des Schichtstoffes aus flexiblem Graphit bestehen oder nur eine dieser Flachseiten aus flexiblem Graphit oder keine dieser Flachseiten aus flexiblem Graphit besteht,
**dadurch gekennzeichnet,**
**daß** in einem ersten Schritt mehr als eine Lage flexiblen Graphits (1;...) je mit mindestens einer Kunststoffolie (3;...) mit einer Zugfestigkeit von mindestens 25 MPa und einem Elastizitätsmodul von mindestens 0,4 GPa an mindestens einer ihrer Flachseiten so übereinandergelegt und miteinander verbunden werden, daß jede der in dem Verbund (10) innen liegenden Flachseiten der Graphitlagen (1;...) mit je einer Kunststoffolie (3;...) verbunden ist und daß entweder keine oder eine oder beide der zwei außen liegenden Flachseiten des Verbundes (10) mit einer Kunststoffolie (3;...) verbunden ist,
- **daß** in einem zweiten Schritt der aus den Lagen flexiblen Graphits (1;...) und der Kunststoffolie (3) oder den Kunststoffolien (3';...) bestehende Folienverbund (10) in Bänder (9;...) von nicht mehr als 5 mm Breite zerschnitten wird,
- **daß** in einem dritten Schritt mindestens zwei der nach dem zweiten Schritt erhaltenen Bänder (9;...) nach einem textilen Verarbeitungsverfahren zu einem Garn (15) verarbeitet werden, und
- **daß** das nach dem dritten Schritt erhaltene Garn (15) auf einen runden, elliptischen, ovalen oder rechteckigen Querschnitt kalibriert (16;17) wird.

23. Verfahren zum Herstellen eines Packungsgarns nach Patentanspruch 21 oder 22,
**dadurch gekennzeichnet, daß**
das Verbinden der Lage oder der Lagen aus flexiblem Graphit (1;...) mit der Lage oder den Lagen aus Kunststoffolie (3;...) und das Zerteilen der miteinander verbundenen Lagen (10) in Streifen kontinuierlich geschieht.

24. Verfahren zum Herstellen eines Packungsgarns nach einem oder mehreren der Patentansprüche 21 bis 23,
**dadurch gekennzeichnet, daß**
die Lagen aus flexiblem Graphit (1;...) mit der oder den Kunststoffolie/n (3;...) mit einem Kleber (2;...) aus der Gruppe Acrylate, Polysiloxane, Polyurethane, Polyamide, Acetate, Epoxidharze verbunden werden.

25. Verfahren zum Herstellen eines Packungsgarns nach einem oder mehreren der Patentansprüche 21 bis 23,
**dadurch gekennzeichnet, daß**
die Lagen aus flexiblem Graphit (1;...) und der oder den Kunststoffolie/n (3;...) ohne Verwendung eines Klebers (2;...) verbunden werden.

26. Verfahren zum Herstellen eines Packungsgarns nach Patentanspruch 25,
**dadurch gekennzeichnet, daß**
die Lagen aus flexiblem Graphit (1;...) mit der oder den Kunststoffolie/n (3;...) kleberfrei bei einer Temperatur der Verbindungsflächen verschweißt werden, die im Erweichungsbereich der Kunststoffolie/n (3;...) liegt und daß dabei ein Druck von mindestens 0,1 MPa angewandt wird.

27. Verfahren zum Herstellen eines Packungsgarns nach Patentanspruch 26,
**dadurch gekennzeichnet, daß**
die Lagen aus flexiblem Graphit (1;...) mit der oder den Kunststoffolie/n (3;...) aus Polyester kleberfrei bei einer Temperatur im Bereich von 240 bis 270 °C verschweißt werden und daß dabei ein Druck von mindestens 0,1 MPa angewandt wird.

28. Verfahren zum Herstellen eines Packungsgarns nach Patentanspruch 26,
**dadurch gekennzeichnet, daß**
die Lagen aus flexiblem Graphit (1;...) mit Kunststoffolien (3;...) aus der Gruppe Polyimid und perfluorierten Polymeren kleberfrei bei einer Temperatur im Bereich von 350 bis 380°C verschweißt werden und daß dabei ein Druck von mindestens 0,1 MPa angewandt wird.

29. Verfahren zum Herstellen eines Packungsgarns nach Patentanspruch 25,
**dadurch gekennzeichnet, daß**
die Lagen aus flexiblem Graphit (1;...) mit der oder den Kunststoffolie/n (3;...) Kleberfrei unter Verwendung von Haftvermittlern verbunden werden.

30. Verfahren zum Herstellen eines Packungsgarnes nach einem oder mehreren der Patentansprüche 21 bis 29,
**dadurch gekennzeichnet, daß**
in dem dritten Verfahrensschritt mindestens drei der nach dem zweiten Verfahrensschritt erzeugten Bänder (9;...) durch Verflechten zu einem Garn (15) verarbeitet werden.

31. Verfahren zum Herstellen eines Packungsgarnes nach einem oder mehreren der Patentansprüche 21 bis 29,
**dadurch gekennzeichnet, daß**
in dem dritten Verfahrensschritt mindestens zwei der nach dem zweiten Verfahrensschritt erzeugten Bänder (9;...) durch Verdrillen zu einem Garn (15) verarbeitet werden.

32. Verfahren nach einem der Patentansprüche 21 oder 22,
**dadurch gekennzeichnet, daß**
mindestens eins (9) der mindestens zwei Bänder (9;...) für das textile Verarbeiten zu einem Garn (15;17) vor diesem textilen Verarbeiten zu dem Garn (15;17) und nach dem Zerteilen des Folienverbundes (10) in Bänder (9;...) selbst verdrillt wird.

## Claims

1. A packing yarn comprising at least two strips, joined together according to a yarn manufacturing process, of a laminated material which consists of alternately arranged layers of two planar materials which are joined together and comprise specifically, firstly, at least one layer of flexible graphite and, secondly, at least one layer of a reinforcing medium,
- either both outer flat sides of the upper and lower layers of laminated material consisting of flexible graphite or only one of these flat sides consisting of flexible graphite or neither of these flat sides consisting of flexible graphite,
**characterised in that** the strips (9;...) of laminated material (10) have a width of not more than 5 mm and consist of layers of flexible graphite (1;...) having a thickness of not more than 1 mm and a bulk density in the range from 0.7 to 1.8 g/cm³, and of layers of a plastics film (3;...) having a tensile strength of at least 25 MPa and a modulus of elasticity of at least 0.4 GPa.

2. Packing yarn comprising at least two strips, joined together according to a yarn manufacturing process, of a laminated material which consists of a layer of flexible graphite which is joined on at least one of its two flat sides to a reinforcing medium,
**characterised in that** the strips (9;...) of laminated material (10) have a width of not more than 5 mm and consist of one layer of flexible graphite (1) having a thickness of not more than 1 mm and a bulk density in the range between 0.7 and 1.8 g/cm³, and of at least one layer of a plastics film (3;...) having a tensile strength of at least 25 MPa and a modulus of elasticity of at least 0.4 GPa.

3. Packing yarn according to Claim 1 or 2, **characterised in that** the packing yarn (15; 17) consists of at least two strips (9;...) at least one of which is separately twisted before being fabricated into a packing yarn (15; 17) .

4. Packing yarn according to Claim 1, 2 or 3,
**characterised in that** the strips (9;...) of the laminated material (10) have a width of not more than 3 mm and the graphite foils (1;...) contained therein have a thickness of not more than 0.5 mm.

5. Packing yarn according to one or more of claims 1 to 4, **characterised in that** the strips (9;...) of the laminated material (10) have a width of not more than 2 mm and the graphite foils (1;...) contained therein have a thickness of not more than 0.35 mm.

6. Packing yarn according to one or more of claims 1 to 5, **characterised in that** the plastics film (3;...) reinforcing the flexible graphite (1;...) has a tensile strength of at least 50 MPa and a modulus of elasticity of at least 1 GPa.

7. Packing yarn according to one or more of claims 1 to 6, **characterised in that** the plastics film (3;...) reinforcing the flexible graphite (1;...) has a tensile strength of at least 140 MPa and a modulus of elasticity of at least 2.5 GPa.

8. Packing yarn according to one or more of claims 1 to 7, **characterised in that** the plastics film (3;...) reinforcing the flexible graphite (1;...) has a thickness of not more than 50 µm.

9. Packing yarn according to one or more of claims 1 to 8, **characterised in that** at least one of the two outwardly-facing flat sides of the graphite foils (1;...) of the strips (9;...) is covered by a film (3;...) from the group consisting of perfluorated polymeric hydrocarbons.

10. Packing yarn according to one or more of claims 1 to 9, **characterised in that** the flexible graphite (1;...) has a carbon content of at least 96 wt.%.

11. Packing yarn according to Claim 10, **characterised in that** the flexible graphite (1;...) has a carbon content of at least 99 wt.%.

12. Packing yarn according to one or more of claims 1 to 11, **characterised in that** the reinforcing plastics film (3;...) is a film from the polyester or polyimide group or the group of perfluorated polymeric hydrocarbons.

13. Packing yarn according to Claim 12, **characterised in that** the reinforcing plastics film (3;...) is a film of stretched polytetrafluoroethylene.

14. Packing yarn according to one or more of claims 1 to 13, **characterised in that** the reinforcing plastics film (3;...) is joined to the flexible graphite (1;...) by an adhesive (2;...).

15. Packing yarn according to one or more of claims 1 to 13, **characterised in that** the reinforcing plastics film (3;...) is joined to the flexible graphite (1;...) without the use of an adhesive (2;...).

16. Packing yarn according to Claim 15, **characterised in that** the reinforcing plastics film (3;...) is welded to the flexible graphite (1;...) with the application of elevated temperatures.

17. Packing yarn according to one or more of claims 1 to 16, **characterised in that** it (15; 17) consists of conjointly twisted strips (9;...) of a laminated material (10) consisting of at least one foil of flexible graphite (1;...) and at least one plastics film (3;...).

18. Packing yarn according to Claim 17, **characterised in that** the conjointly twisted strips (9;...) consist of up to six stacked layers of flexible graphite (1;...) each of which is joined to at least one reinforcing plastics film (3; ... ) .

19. Packing yarn according to Claim 17 or 18,
**characterised in that** it consists of not more than 12 conjointly twisted strips (9;...) of flexible graphite (1; ...) reinforced with at least one plastics film (3;...).

20. Packing yarn according to one or more of claims 1 to 19, **characterised in that** it (15; 17) has a circular, elliptical, oval or rectangular cross-section.

21. A process for manufacturing a packing yarn from at least two strips of a laminated material comprising one layer of flexible graphite which is joined on at least one of its two flat sides to a reinforcing medium, **characterised in that**
- in a first step a width of flexible graphite (1) is joined on at least one of its flat sides to a plastics film (3;...) having a tensile strength of at least 25 MPa and a modulus of elasticity of at least 0.4 GPa,
- in a second step the composite foil (10) consisting of flexible graphite (1) and at least one plastics film (3;...) joined to the flexible graphite (1) is cut into strips (9;...) not more than 5 mm wide,
- in a third step at least two of the strips (9;...) obtained according to the second step are fabricated into a yarn (15) using a textile fabrication process, and
- the yarn (15) obtained according to step 3 is calibrated (16; 17) to a circular, elliptical, oval or rectangular cross-section.

22. Process for manufacturing a packing yarn from at least two strips of a laminated material consisting of alternately arranged layers of two planar materials which are joined together, the laminated material being built up from, firstly, a layer of flexible graphite and, secondly, at least one layer of a reinforcing medium,
- either both outer flat sides of the upper and lower layers of the laminated material consisting of flexible graphite or only one of these flat sides consisting of flexible graphite or none of these flat sides consisting of flexible graphite,
**characterised in that**
- in a first step more than one layer of flexible graphite (1;...) with in each case at least one plastics film (3;...) having a tensile strength of at least 25 MPa and a modulus of elasticity of at least 0.4 GPa are superimposed and joined together on at least one of their flat sides in such a way that each of the flat sides of the graphite layers (1;...) located inside the composite (10) is joined in each case to one plastics film (3;...) and that either neither or one or both of the outwardly-located flat sides of the composite (10) is/are joined to a plastics film (3;...),
- in a second step the composite foil (10) consisting of the layers of flexible graphite (1;...) and the plastics film (3) or plastics films (3';...) is cut into strips (9;...) not more than 5 mm wide,
- in a third step at least two of the strips (9;...) obtained according to the second step are fabricated into a yarn (15) according to a textile fabrication process, and
- the yarn (15) obtained according to the third step is calibrated (16; 17) to a circular, elliptical, oval or rectangular cross-section.

23. Process for manufacturing a packing yarn according to Claim 21 or 22, **characterised in that** the joining of the layer or layers of flexible graphite (1;....) to the layer or layers of plastics film (3;...) and the cutting of the joined layers (10) into strips is carried out continuously.

24. Process for manufacturing a packing yarn according to one or more of claims 21 to 23, **characterised in that** the layers of flexible graphite (1;...) are joined to the plastics film/s (3;...) with an adhesive (2;...) from the group consisting of acrylates, polysiloxanes, polyurethanes, polyamides, acetates and epoxy resins.

25. Process for manufacturing a packing yarn according to one or more of claims 21 to 23, **characterised in that** the layers of flexible graphite (1;...) and the plastics layer or layers (3;...) are joined without the use of an adhesive (2;...).

26. Process for manufacturing a packing yarn according to Claim 25, **characterised in that** the layers of flexible graphite (1;...) are welded to the plastics film or films (3;...) without adhesive at a temperature of the joining surfaces which is in the softening range of the plastics film/s (3;...) and **in that** a pressure of at least 0.1 MPa is applied during the welding.

27. Process for manufacturing a packing yarn according to Claim 26, **characterised in that** the layers of flexible graphite (1;...) are welded to the plastics film or films (3;...) of polyester without adhesive at a temperature in the range from 240 to 270°C and **in that** a pressure of at least 0.1 MPa is applied during the welding.

28. Process for manufacturing a packing yarn according to Claim 26, **characterised in that** the layers of flexible graphite (1;...) are welded to plastics films (3;...) from the polyimide group and perfluorated polymers without adhesive at a temperature in the range from 350 to 380°C and **in that** a pressure of at least 0.1 MPa is applied during the welding.

29. Process for manufacturing packing yarn according to Claim 25, **characterised in that** the layers of flexible graphite (1;...) are joined to the plastics film or films (3;...) with the use of bonding agents.

30. Process for manufacturing a packing yarn according to one or more of claims 21 to 29, **characterised in that** in the third process step at least three of the strips (9;...) produced according to the second process step are fabricated into a yarn (15) by braiding.

31. Process for manufacturing a packing yarn according to one or more of claims 21 to 29, **characterised in that** in the third process step at least two of the strips (9;...) produced according to the second process step are fabricated into a yarn (15) by twisting.

32. Process for manufacturing a packing yarn according to either of claims 21 or 22, **characterised in that** at least one (9) of the at least two strips (9;...) for textile fabrication into a yarn (15; 17) are themselves twisted before this textile fabrication into a yarn (15; 17) and after the dividing of the composite foil (10) into strips (9;...).

## Revendications

1. Fil de garniture composé au moins de deux bandes en stratifié reliées entre elles selon un procédé de fabrication de fils, stratifié qui comprend des couches disposées en alternance de deux matériaux plats qui sont reliés entre eux et avec, premièrement au moins une couche de graphite flexible et, deuxièmement, au moins une couche d'un moyen de renfort,
dans lequel soit les deux côtés plats extérieurs de la couche supérieure et de la couche inférieure du stratifié comprennent un graphite flexible, soit uniquement un de ces côtés plats comprend un graphite flexible, soit aucun de ces côtés plats ne comprend un graphite flexible,
**caractérisé en ce que**
les bandes (9 ; ...) en stratifié (10) présentent une largeur inférieure à 5 mm et comprennent des couches de graphite flexible (1 ; ...) qui présente une épaisseur inférieure à 1 mm et une masse volumique ayant un ordre de grandeur de 0,7 à 1,8 g/cm³,
et comprennent des couches d'une feuille en plastique (3 ; ...) avec une résistance à la traction d'au moins 25 MPa et un module d'élasticité d'au moins 0,4 GPa.

2. Fil de garniture composé au moins de deux bandes en stratifié reliées entre elles selon un procédé de fabrication de fils, stratifié qui comprend une couche de graphite flexible qui est reliée avec un moyen de renfort sur au moins un de ses deux côtés plats,
**caractérisé en ce que**
les bandes (9 ; ...) en stratifié (10) présentent une largeur inférieure à 5 mm et comprennent une couche de graphite flexible (1) qui présente une épaisseur inférieure à 1 mm et une masse volumique ayant un ordre de grandeur de 0,7 à 1,8 g/cm³,
et comprennent au moins une couche d'une feuille en plastique (3 ; 3') ayant une résistance à la traction d'au moins 25 MPa et un module d'élasticité d'au moins 0,4 GPa.

3. Fil de garniture selon la revendication 1 ou 2,
**caractérisé en ce que**
le fil de garniture (15 ; 17) comprend au moins deux bandes (9 ; ...), dont une est au moins tortillée sur elle-même avant la transformation en fil de garniture (15 ; 17).

4. Fil de garniture selon la revendication 1, 2 ou 3,
**caractérisé en ce que**
les bandes (9 ; ...) en stratifié (10) ont une largeur inférieure à 3 mm et les feuilles de graphite (1 ; ...) contenues dans celles-ci ont une épaisseur inférieure à 0,5 mm.

5. Fil de garniture selon une ou plusieurs des revendications 1 à 4,
**caractérisé en ce que**
les bandes (9 ; ...) en stratifié (10) ont une largeur inférieure à 2 mm et les feuilles de graphite (1 ; ...) contenues dans celles-ci ont une épaisseur inférieure à 0,35 mm.

6. Fil de garniture selon une ou plusieurs des revendications 1 à 5,
**caractérisé en ce que**
la feuille en plastique (3 ; ...) renforçant le graphite flexible (1 ; ...) a une résistance à la traction d'au moins 50 MPa et un module d'élasticité d'au moins 1 GPa.

7. Fil de garniture selon une ou plusieurs des revendications 1 à 6,
**caractérisé en ce que**
la feuille en plastique (3 ; ...) renforçant le graphite flexible (1 ; ...) a une résistance à la traction d'au moins 140 MPa et un module d'élasticité d'au moins 2,5 GPa.

8. Fil de garniture selon une ou plusieurs des revendications 1 à 7,
**caractérisé en ce que**
la feuille en plastique (3 ; ...) renforçant le graphite flexible (1 ; ...) a une épaisseur inférieure à 50 µm.

9. Fil de garniture selon une ou plusieurs des revendications 1 à 8,
**caractérisé en ce que**
au moins un des deux côtés plats des feuilles de graphite (1 ; ...) des bandes (9 ; ...) tournées vers l'extérieur est recouvert par une feuille (3 ; ...) du groupe des hydrocarbures polymères perfluorés.

10. Fil de garniture selon une ou plusieurs des revendications 1 à 9,
**caractérisé en ce que**
le graphite flexible (1 ; ...) a une teneur en carbone d'au moins 96 % en masse.

11. Fil de garniture selon la revendication 10,
**caractérisé en ce que**
le graphite flexible (1 ; ...) a une teneur en carbone d'au moins 99 % en masse.

12. Fil de garniture selon une ou plusieurs des revendications 1 à 11,
**caractérisé en ce que**
la feuille en plastique de renfort (3 ; ...) est une feuille du groupe polyester, polyimide ou hydrocarbures polymères perfluorés.

13. Fil de garniture selon la revendication 12,
**caractérisé en ce que**
la feuille en plastique de renfort (3 ; ...) est une feuille en polytétrafluoréthylène étiré.

14. Fil de garniture selon une ou plusieurs des revendications 1 à 13,
**caractérisé en ce que**
la feuille en plastique de renfort (3 ; ...) est liée avec le graphite flexible (1 ; ...) par un adhésif (2 ; ...).

15. Fil de garniture selon une ou plusieurs des revendications 1 à 13,
**caractérisé en ce que**
la feuille en plastique de renfort (3 ; ...) est liée avec le graphite flexible (1 ; ...) sans utiliser d'adhésif (2 ; ...).

16. Fil de garniture selon la revendication 15,
**caractérisé en ce que**
la feuille en plastique de renfort (3 ; ...) est thermosoudée avec le graphite flexible (1 ; ...) en utilisant des températures élevées.

17. Fil de garniture selon une ou plusieurs des revendications 1 à 16,
**caractérisé en ce que**
il (15 ; 17) comprend des bandes (9 ; ...) tortillées les unes avec les autres, qui comprennent un stratifié (10) composé d'au moins une feuille de graphite flexible (1 ; ...) et d'au moins une feuille en plastique (3 ; ....).

18. Fil de garniture selon la revendication 17,
**caractérisé en ce que**
les bandes (9 ; ...) tortillées les unes avec les autres comprennent jusqu'à six couches de graphite flexible (1 ; ...) disposées les unes sur les autres, chacune d'elles étant liée avec au moins une feuille en plastique renforçant (3 ; ...).

19. Fil de garniture selon la revendication 17 ou 18,
**caractérisé en ce que**
il comprend moins de 12 bandes (9 ; ...) de graphite flexible (1 ; ...) tortillées les unes avec les autres et renforcées avec au moins une feuille en plastique (3 ; ...).

20. Fil de garniture selon une ou plusieurs des revendications 1 à 19,
**caractérisé en ce que**
il (15 ; 17) présente une section ronde, elliptique, ovale ou rectangulaire.

21. Procédé de fabrication d'un fil de garniture composé au moins de deux bandes en stratifié qui comprend une couche de graphite flexible qui est reliée avec un moyen de renfort sur au moins un de ses deux côtés plats,
**caractérisé en ce que**
- dans une première étape, on relie une bande de graphite flexible (1) sur au moins un de ses côtés plats avec une feuille en plastique (3 ; ...) ayant une résistance à la traction d'au moins 25 MPa et un module d'élasticité d'au moins 0,4 GPa ;
- dans une deuxième étape, on découpe en bandes (9 ; ...) de largeur inférieure à 5 mm le composite de feuilles (10) composé de graphite flexible (1) et d'au moins une feuille en plastique (3 ; ...) reliée avec le graphite flexible (1),
- dans une troisième étape, on transforme en un fil (15) selon un procédé de transformation textile au moins deux des bandes (9 ; ...) obtenues après la deuxième étape, et
- on calibre le fil (15) obtenu après la troisième étape sur une section (16 ; 17) ronde, elliptique, ovale ou rectangulaire.

22. Procédé de fabrication d'un fil de garniture composé au moins de deux bandes en stratifié qui comprend des couches disposées en alternance de deux matériaux plats qui sont reliés entre eux, le stratifié étant composé, premièrement, d'au moins une couche de graphite flexible et, deuxièmement, d'au moins une couche d'un moyen de renfort
- dans lequel soit les deux côtés plats extérieurs de la couche supérieure et de la couche inférieure du stratifié comprennent un graphite flexible, soit uniquement un de ces côtés plats comprend un graphite flexible, soit aucun de ces côtés plats ne comprend un graphite flexible,
**caractérisé en ce que**
- dans une première étape, plusieurs couches de graphite flexible (1 ; ...), chacune avec au moins une feuille en plastique (3 ; ...) ayant une résistance à la traction d'au moins 25 MPa et un module d'élasticité d'au moins 0,4 GPa, sont reliées les unes avec les autres et disposées les unes sur les autres sur au moins un de leurs côtés plats, de sorte que chacun des côtés plats des couches de graphite (1 ; ...) tournés vers l'intérieur du composite (10) est relié avec chaque feuille en plastique (3 ; ...), et soit un, soit aucun, soit les deux côtés plats du composite (10) tournés vers l'extérieur est (sont) relié(s) à une feuille en plastique (3 ; ...),
- dans une deuxième étape, le composite de feuilles (10) composé des couches de graphite flexible (1 ; ...) et de la feuille en plastique (3) ou des feuilles en plastique (3' ; ...) est découpé en bandes (9 ; ...) de largeur inférieure à 5 mm,
- dans une troisième étape, au moins deux des bandes (9 ; ...) obtenues après la deuxième étape sont transformées en un fil (15) selon un procédé de transformation textile, et
- le fil (15) obtenu après la troisième étape est calibré sur une section (16 ; 17) ronde, elliptique, ovale ou rectangulaire.

23. Procédé de fabrication d'un fil de garniture selon la revendication 21 ou 22,
**caractérisé en ce que**
la liaison de la couche ou des couches de graphite flexible (1 ; ...) avec la couche ou les couches en feuille de plastique (3 ; ...) et la séparation des couches (10) reliées les unes avec les autres sont réalisés en bandes continues.

24. Procédé de fabrication d'un fil de garniture selon une ou plusieurs des revendications 21 à 23,
**caractérisé en ce que**
les couches de graphite flexible (1 ; ...) sont liés avec la ou les feuille(s) en plastique (3 ; ...) par un adhésif (2) du groupe acrylate, polysiloxane, polyuréthanne, polyamide, acétate, résines époxydes.

25. Procédé de fabrication d'un fil de garniture selon une ou plusieurs des revendications 21 à 23,
**caractérisé en ce que**
les couches de graphite flexible (1 ; ...) et la ou les feuille(s) en plastique (3 ; ...) sont reliées sans utiliser d'adhésif (2 ; ...).

26. Procédé de fabrication d'un fil de garniture selon la revendication 25,
**caractérisé en ce que**
les couches de graphite flexible (1 ; ...) sont thermosoudées sans adhésif avec la ou les feuille(s) en plastique (3 ; ...) à une température pour les surfaces d'interconnexion qui est dans l'intervalle de ramollissement de la (des) feuille(s) en plastique (3 ; ...),
et on applique alors une pression d'au moins 0,1 MPa.

27. Procédé de fabrication d'un fil de garniture selon la revendication 26,
**caractérisé en ce que**
les couches de graphite flexible (1 ; ...) sont thermosoudées sans adhésif avec la ou les feuille(s) en plastique (3 ; ...) en polyester à une température comprise entre 240 et 270°C et on applique alors une pression d'au moins 0,1 MPa.

28. Procédé de fabrication d'un fil de garniture selon la revendication 26,
**caractérisé en ce que**
les couches de graphite flexible (1 ; ...) sont thermosoudées sans adhésif avec des feuille(s) en plastique (3 ; ...) du groupe polyimide et des polymères perfluorés à une température comprise entre 350 et 380°C et on applique alors une pression d'au moins 0,1 MPa.

29. Procédé de fabrication d'un fil de garniture selon la revendication 25,
**caractérisé en ce que**
les couches de graphite flexible (1 ; ...) sont liées avec la ou les feuille(s) en plastique (3 ; ...) en utilisant des agents de surface sans adhésif.

30. Procédé de fabrication d'un fil de garniture selon une ou plusieurs des revendications 21 à 29,
**caractérisé en ce que**
dans la troisième étape du procédé, au moins trois des bandes (9 ; ...) produites après la deuxième étape du procédé sont transformées en un fil (15) par tressage.

31. Procédé de fabrication d'un fil de garniture selon une ou plusieurs des revendications 21 à 29,
**caractérisé en ce que**
dans la troisième étape du procédé, au moins deux des bandes (9 ; ...) produites après la deuxième étape du procédé sont transformées en un fil (15) par tordage.

32. Procédé selon une des revendications 21 ou 22,
**caractérisé en ce que**
au moins une (9) d'au moins deux bandes (9 ; ...) pour la transformation textile en un fil (15 ; 17) est tortillée sur elle-même avant cette transformation textile en fil (15 ; 17) et après la séparation du composite de feuilles (10) en bandes (9 ; ...).
